# EUROPÄISCHE PATENTSCHRIFT

(11) **EP 1 202 897 B1**
(45) Veröffentlichungstag und Bekanntmachung des Hinweises auf die Patenterteilung: **05.10.2005**
(21) Anmeldenummer: 00954330.7
(22) Anmeldetag: 13.07.2000
(51) Int. Cl.: B62D 1/18, B62D 1/19

(54) **LENKSÄULE UND VERSTELLVERFAHREN FÜR EINE LENKSÄULE**
STEERING COLUMN AND METHOD OF ADJUSTING A STEERING COLUMN
COLONNE DE DIRECTION ET PROCEDE DE DEPLACEMENT D'UNE COLONNE DE DIRECTION

(30) Priorität: 13.07.1999 DE 29912237 U
(43) Veröffentlichungstag der Anmeldung: 08.05.2002
(73) Patentinhaber: ThyssenKrupp Presta AG, 9492 Eschen (LI)
(72) Erfinder: MÜLLER, Olaf, D-65428 Rüsselsheim (DE)
(74) Vertreter: Lindner, Manfred Klaus
(86) Internationale Anmeldenummer: PCT/DE2000/002286
(87) Internationale Veröffentlichungsnummer: WO 2001/003991

(56) Entgegenhaltungen:
- WO-A-98/22325
- WO-A-98/58831
- DE-A- 19 829 237

## Beschreibung

Die Erfindung betrifft eine Lenksäule nach dem Oberbegriff des Anspruchs 1 sowie ein Verstellverfahren für eine Lenksäule nach dem Oberbegriff des Anspruchs 15.

Die auf den vorliegenden Anmelder/Inhaber zurückgehenden älteren deutschen Gebrauchsmusteranmeldungen 298 08 317.5, 299 01 657.9 und 299 00 289.6 sowie die darauf beruhende PCT-Anmeldung WO 9958389 A1 und die PCT-Anmeldung WO 0076832 A1 befassen sich allgemein mit einer Sicherheitslenksäule, einem Sicherheitssystem für ein Fahrzeug, einem Fahrzeug mit einem Sicherheitssystem sowie einem Sicherheitsverfahren, jeweils um Insassen bei einem Unfall zu schützen. Die vorliegende Erfindung betrifft Verbesserungen sämtlicher in der früheren Anmeldung behandelten Techniken und Ausführangsbeispiele insbesondere hinsichtlich der Auslösesteuerung der Lenksäule und speziell für verschiedene Insassen und Angurtzustände. Insofern ist der vollständige Offenbarungsgehalt dieser älteren Anmeldungen insbesondere hinsichtlich der Auslösesteuerung der Lenksäule und speziell für verschiedene Insassen und Angurtzustände hiermit durch die Bezugnahmen vollumfänglich in die vorliegenden Unterlagen aufgenommen.

Beispielsweise aus den genannten älteren Anmeldungen ist eine Fahrzeug-Lenksäule bekannt, die im Falle eines Unfalls so verstellt wird, dass jedenfalls das lenkradseitige Ende von einem Insassen weg bewegt wird.

Die deutsche Anmeldung DE 198 292 37 A1 offenbart eine Lenksäule und deren Verstellverfahren gemäß der Oberbegriffe der Ansprüche 1 und 15.

Die vorliegende Erfindung hat das Ziel, diese Lenksäule und ihr Verstellverfahren zum Schutz der Insassen weiter zu verbessern.

Dieses Ziel wird mit einer Lenksäule nach dem Anspruch 1 und einem Verstellverfahren für eine Lenksäule nach dem Anspruch 15 erreicht.

Im Rahmen der Erfindung wird eine Lenksäule für ein Fahrzeug geschaffen, mit Verstelleinrichtungen, die im Falle eines Unfalls auslösbar sind, um zumindest einen Lenkrad-Endbereich der Lenksäule von einem Insassen weg zu bewegen, wobei die Verstelleinrichtungen Lastaufhahmeeinrichtungen zum Dämpfen einer Bewegung zumindest des Lenkrad-Endbereiches der Lenksäule von einem Insassen weg enthalten.

Erfindungsgemäß wird ferner eine Lenksäule für ein Fahrzeug geschaffen, mit Verstelleinrichtungen, die im Falle eines Unfalls auslösbar sind, um zumindest einen Lenkrad-Endbereich der Lenksäule von einem Insassen weg zu bewegen, wobei die Verstelleinrichtungen für wenigstens zwei Betriebsmodi ausgelegt sind, und wobei eine Steuerung zum Erfassen von Insassenparametern mittels Detektionseinrichtungen und Auslösen eines Betriebsmodus der Verstelleinrichtungen in Abhängigkeit von den Insassenparametern vorgesehen ist.

So kann jeweils auf unterschiedliche Umstände, wie beispielsweise einen grossen nicht angegurteten Fahrer, einen grossen angegurteten Fahrer, einen kleinen angegurteten Fahrer, etc. Rücksicht genommen und im Falle eines Unfalls eine jeweils optimale Lenksäulenverstellung durchgeführt werden.

Erfindungsgemäß ist bei einer erfindungsgemäßen Lenksäule ferner vorgesehen, dass die Verstelleinrichtungen Antriebseinrichtungen zum Bewirken der Bewegung zumindest des Lenkrad-Endbereiches der Lenksäule von einem Insassen weg enthalten, und dass die Antriebseinrichtungen im Falle eines Unfalls von der Steuerung in Abhängigkeit von den Insassenparametern auslösbar sind. Eine bevorzugte Weiterbildung davon besteht darin, dass die Antriebseinrichtungen einen pyrotechnischen Gasgenerator enthalten und/oder elektrisch auslösbar sind.

Gemäß der vorliegenden Erfindung ist bei der Lenksäule ferner vorgesehen, dass die Verstelleinrichtungen Lastaufnahmeeinrichtungen zum Dämpfen einer Bewegung zumindest des Lenkrad-Endbereiches der Lenksäule von einem Insassen weg enthalten, und dass die Lastaufnahmeeinrichtungen im Falle eines Unfalls von der Steuerung in Abhängigkeit von den Insassenparametern direkt oder indirekt betreibbar sind. Dies läßt sich vorzugsweise dadurch weiterbilden, dass die Lastaufnahmeeinrichtungen wenigstens zwei Stufen enthalten, die im Falle eines Unfalls von der Steuerung in Abhängigkeit von den Insassenparametern direkt oder indirekt betreibbar sind, wobei vorzugsweise die Stufen der Lastaufnahmeeinrichtungen einzeln mit insbesondere jeweils unterschiedlichen Lastaufnahmeeigenschaften und/oder gleichzeitig mit addierten Lastaufhahmeeigenschaften betreibbar sind. Alternativ oder zusätzlich kann vorgesehen sein, dass die Lastaufnahmeeinrichtungen oder ggf. jede Stufe davon einzeln im Falle eines Unfalls von der Steuerung in Abhängigkeit von den Insassenparametern direkt oder indirekt abschaltbar sind. Weitere mit diesen Ausführungen kombinierbare Merkmale bestehen darin, dass die Lastaufnahmeeinrichtungen oder ggf. eine Stufe davon Deformationseinrichtungen, insbesondere mit längs eines Bewegungsweges spanabhebenden Schneidmessem und/oder materialdeformierenden Bolzen, und/oder Bremseinrichtungen, insbesondere einen Bremsschlitten mit vorzugsweise wenigstens zwei Bremskraftstufen, enthalten.

Mit Vorzug ist die Steuerung zum Erfassen der Sitzposition, des Angurtzustandes, der Grösse, des Gewichts und/oder der Körperhaltung des Insassen mittels der Detektionseinrichtungen ausgelegt.

Bei der vorstehenden Ausführung kann die Steuerung vorzugsweise zum Auslösen der Antriebseinrichtungen in Abhängigkeit von der Sitzposition des Insassen und insbesondere zum Erfassen eines vorgebbaren Abstandes oder einer Unterschreitung eines vorgebbaren Abstandes der Position des Sitzes für den Insassen vom Lenkrad mittels der Detektionseinrichtungen ausgelegt sein. Bei letzterer Ausgestaltung ist es ferner bevorzugt, wenn die Steuerung zum Auslösen eines solchen Betriebsmodus der Verstelleinrichtungen ausgelegt ist, bei dem im Falle eines Unfalls bei einem erfaßten vorgebbaren Abstand oder einer erfaßten Unterschreitung eines vorgebbaren Abstandes der Position des Sitzes für den Insassen vom Lenkrad die Antriebseinrichtungen der Verstelleinrichtungen ausgelöst werden. Eine vorteilhafte Weiterbildung davon besteht darin, dass die Steuerung zum Betreiben der Lastaufnahmeeinrichtungen oder ggf. jeder Stufe davon einzeln in Abhängigkeit vom Angurtzustand und/oder der Sitzposition des Insassen ausgelegt ist, wobei die Steuerung insbesondere zum Auslösen eines solchen Betriebsmodus der Verstelleinrichtungen ausgelegt ist, bei dem im Falle eines Unfalls bei einem nicht angegurteten Insassen die Lastaufnahmeeinrichtungen oder zumindest eine Stufe davon wirksam sind/ist. Alternativ oder zusätzlich kann die Steuerung zum Auslösen eines solchen Betriebsmodus der Verstelleinrichtungen ausgelegt sein, bei dem im Falle eines Unfalls bei einem erfaßten vorgebbaren Abstand oder einer erfaßten Unterschreitung eines vorgebbaren Abstandes der Position des Sitzes für den Insassen vom Lenkrad die Lastaufnahmeeinrichtungen oder zumindest eine Stufe davon unwirksam sind/ist.

Es ist ferner bevorzugt, dass die Detektionseinrichtungen Positionserkennungseinrichtungen des Sitzes für den Insassen, Zustandserkennungseinrichtungen des Gurtschlosses für den Anschnallgurt des Insassen, Grössen-, Gewichts- und/oder Körperhaltungserkennungseinrichtungen bezüglich des Insassen enthalten. Dabei können die Positionserkennungseinrichtungen des Sitzes für den Insassen insbesondere wenigstens einen elektrischen oder optischen Schalter in oder im Zusammenhang mit Sitzführungsschienen enthalten, und/oder die Zustandserkennungseinrichtungen des Gurtschlosses für den Anschnallgurt des Insassen wenigstens einen elektrischen oder optischen Schlossnutzungsschalter enthalten.

Das weiter oben angegebene Ziel der vorliegenden Erfindung wird auch mit einem Verstellverfahren für eine Lenksäule eines Fahrzeuges erreicht, wobei im Falle eines Unfalls zumindest ein Lenkrad-Endbereich der Lenksäule mittels Verstelleinrichtungen von einem Insassen weg bewegt wird. Bei diesem Verfahren werden erfindungsgemäß mittels Detektionseinrichtungen Insassenparameter erfaßt und erfolgt die Bewegung zumindest des Lenkrad-Endbereiches der Lenksäule vom Insassen weg in Abhängigkeit von den Insassenparametern gemäß einem Betriebsmodus von mehreren Betriebsmodi der Verstelleinrichtungen.

Erfindungsgemäß wird dabei ein Antrieb der Verstelleinrichtungen zum Bewirken der Bewegung zumindest des Lenkrad-Endbereiches der Lenksäule vom Insassen weg im Falle eines Unfalls in Abhängigkeit von den Insassenparametern ausgelöst und/oder eine Bewegung zumindest des Lenkrad-Endbereiches der Lenksäule von einem Insassen weg im Falle eines Unfalls in Abhängigkeit von den Insassenparametern gedämpft. Gemäß einer bevorzugten Weiterbildung der letztgenannten Verfahrensvariante wird eine Dämpfung der Bewegung zumindest des Lenkrad-Endbereiches der Lenksäule von einem Insassen weg im Falle eines Unfalls in Abhängigkeit von den Insassenparametern insbesondere wahlweise in einzelnen Stufen abgeschaltet.

Bei dem erfindungsgemäßen Verfahren ist es mit Vorteil auch möglich, dass die Sitzposition, der Angurtzustand, die Grösse, das Gewicht und/oder die Körperhaltung des Insassen als Insassenparameter erfaßt werden/wird. Dabei ist es bevorzugt, dass die Verstelleinrichtungen in Abhängigkeit von der Sitzposition des Insassen angetrieben werden, wobei insbesondere die Verstelleinrichtungen im Falle eines Unfalls bei einem erfaßten vorgebbaren Abstand oder einer erfaßten Unterschreitung eines vorgebbaren Abstandes der Position des Sitzes für den Insassen vom Lenkrad gemäß einem Betriebsmodus nicht angetrieben werden. Alternativ oder zusätzlich können die Verstelleinrichtungen in Abhängigkeit vom Angurtzustand und/oder von der Sitzposition des Insassen gedämpft werden. Bei der letzteren Vorgehensweise können ferner die Verstelleinrichtungen im Falle eines Unfalls bei einem nicht angegurteten Insassen gemäß einem Betriebsmodus ganz oder teilweise gedämpft werden und/oder können die Verstelleinrichtungen im Falle eines Unfalls bei einem erfaßten vorgebbaren Abstand oder einer erfaßten Unterschreitung eines vorgebbaren Abstandes der Position des Sitzes für den Insassen vom Lenkrad gemäß einem Betriebsmodus ganz oder teilweise gedämpft werden.

Weitere bevorzugte und vorteilhafte Ausgestaltungen ergeben sich aus Kombinationen der abhängigen Ansprüche sowie aus dem gesamten Offenbarungsgehalt der vorliegenden Unterlagen.

Mit der vorliegenden Erfindung werden somit eine Lenksäule sowie ein Verstellverfahren für eine Lenksäule gemäß eingangs angegebenen älteren Anmeldungen in vorteilhafter Weise weiter verbessert.

Anhand der nachfolgend beschriebenen und in den Zeichnungen dargestellten Ausführungs- und Anwendungsbeispiele wird die Erfindung näher erläutert.
- Fig. 1: zeigt schematisch Betriebsmodi von Verstelleinrichtungen eines ersten Ausführungsbeispiels einer Lenksäule,
- Fig. 2: zeigt schematisch ein Schalt- und Autbauschema der Steuerung des ersten Ausführungsbeispiels der Lenksäule von Fig. 1,
- Fig. 3a, 3b und 3c: zeigen schematisch die Verstelleinrichtungen des ersten Ausführungsbeispiels der Lenksäule von Fig. 1 in einer Ansicht von unten (linke Hälfte von Fig. 3a) und oben (rechte Hälfte von Fig. 3a) bzw. entsprechende Querschnitte,
- Fig. 4: zeigen schematisch die Antriebseinrichtungen des ersten Ausführungsbeispiels der Lenksäule von Fig. 1,
- Fig. 5: zeigen schematisch die Lastaufnahmeeinrichtungen des ersten Ausführungsbeispiels der Lenksäule von Fig. 1,
- Fig. 6 bis 8: zeigen schematisch in einer Querschnittsansicht ein zweites Ausführungsbeispiel einer Lenksäule vor einer Auslösung, nach einer Auslösung bei einem kleinen Insassen bzw. nach einer Auslösung bei einem grossen,
- Fig. 9 bis 11: zeigen schematisch die Verstelleinrichtungen eines dritten Ausführungsbeispiels der Lenksäule in einer teilweise geschnittenen Draufsicht bzw. zwei Querschnittsansichten,
- Fig. 12: zeigt schematisch verschiedene Positionen der Lenksäule des dritten Ausführungsbeispiels in Abhängigkeit von der Wirkung von Verstelleinrichtungen,
- Fig. 13 und 14: verdeutlichen schematisch die Stellung des Schlittens der Verstelleinrichtungen für die beiden Positionen der Lenksäule in der Fig. 12,
- Fig. 15: ist ein Diagramm zur Veranschaulichung der verschiedenen Betriebsmodi der Lenksäule des dritten Ausführungsbeispiels, und
- Fig. 16: zeigt schematisch ein Schalt- und Aufbauschema der Verstelleinrichtungen und der zugehörigen Steuerung eines vierten Ausführungsbeispiels der Lenksäule.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

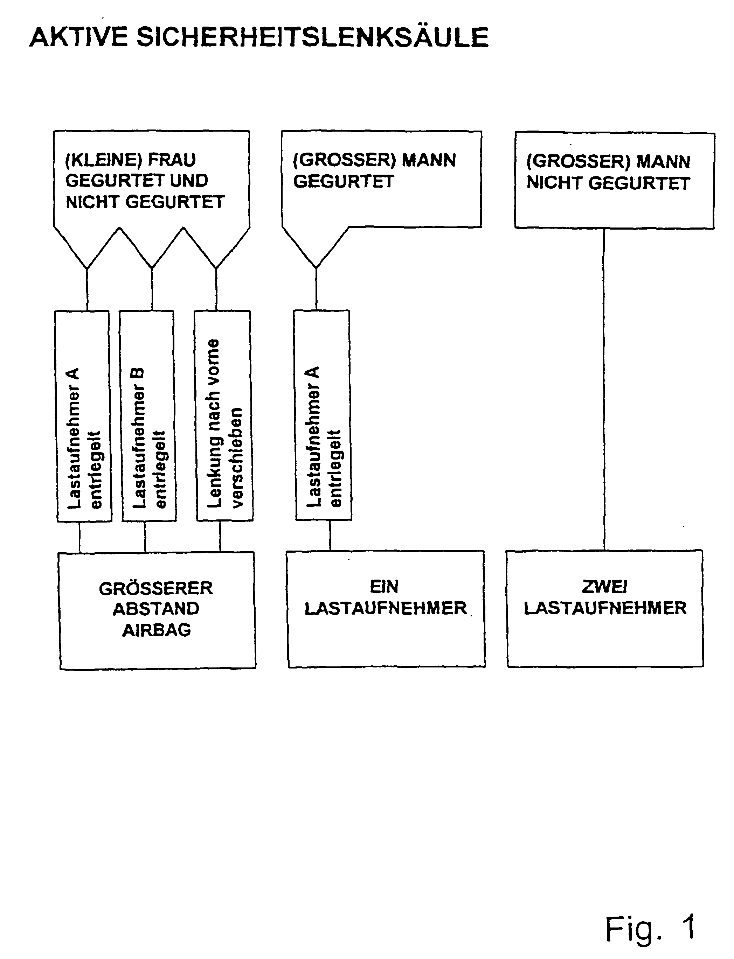

Unter Bezugnahme auf die Fig. 1, 2, 3a, 3b, 3c, 4 und 5, denen weitere Einzelheiten und Angaben zu entnehmen sind, werden nachfolgend weitere Merkmale, Funktionen und Vorteile der vorliegenden Erfindung anhand eines ersten Ausführungsbeispiels lediglich exemplarisch näher erläutert.

Dieses Ausführungsbeispiel betrifft eine aktive Sicherheitslenksäule für die drei wichtigsten Beanspruchungen im Falle eines Unfalls, wie es durch das Schema der Fig. 1 verdeutlicht wird, die den Aufbau und die Betriebsmodi für die entsprechende Lenksäule zeigt. Bei diesem ersten Ausführungsbeispiel sind entsprechend drei Anforderungen bei einem Unfall drei auf die jeweiligen Insassenparameter abgestimmte Betriebsmodi vorgesehen:
1. Mehr Airbagabstand bei kleinen Personen, indem einerseits das Lenkradende der Lenksäule infolge eines Front-Unfalls aktiv beispielsweise durch einen pyrotechnisch angetriebenen Zylinder vom Insassen wegbewegt wird, verhindert die Verletzungsgefahr solcher kleinen Personen durch den Airbag selbst, da sie sich sonst jedenfalls durch die unfallbedingte abrupte trägheitsbedingte Vorwärtsbewegung zu dem Lenkrad hin zu nahe an dem sich mit Wucht aufblasenden Airbag aufhalten würden, und andererseits Lastaufnehmer, die für Betriebsmodi für grosse Personen vorgesehen sind (siehe nachfolgend die Punkte 2. und 3.), ausser Funktion gesetzt werden;
2. Lastspitzenabbau bei großen angeschnallten Personen, indem infolge eines Front-Unfalls das Lenkradende der Lenksäule nicht aktiv vom Insassen wegbewegt wird (ein z.B. für eine aktive Rückziehung des Lenkradendes der Lenksäule vorgesehener pyrotechnisch angetriebener Zylinder wird nicht ausgelöst) und gleichzeitig dafür gesorgt wird, dass ein für diesen Anwendungsfall vorbestimmter Lastaufnehmer A zum Einsatz kommt, der beim Auftreffen des Insassen auf das Lenkrad dadurch für eine entsprechende Energieabsorption sorgt, dass eine Bewegung zumindest des Lenkradendes der Lenksäule bedingt durch das Auftreffen des Insassen mit dem Lastaufnehmer abgebremst wird; und
3. großer Lastspitzenabbau bei großen unangeschnallten Personen, indem infolge eines Front-Unfalls das Lenkradende der Lenksäule nicht aktiv vom Insassen wegbewegt wird (ein z.B. für eine aktive Rückziehung des Lenkradendes der Lenksäule vorgesehener pyrotechnisch angetriebener Zylinder wird nicht ausgelöst) und gleichzeitig dafür gesorgt wird, dass zwei für diesen Anwendungsfall vorbestimmte Lastaufnehmer A und B simultan und additiv zum Einsatz kommen, die beim Auftreffen des Insassen auf das Lenkrad dadurch für eine entsprechende Energieabsorption sorgen, dass eine Bewegung zumindest des Lenkradendes der Lenksäule bedingt durch das Auftreffen des Insassen mit den Lastaufnehmern A und B abgebremst wird.

Bei dem ersten Ausführungsbeispiel ist somit eine zweifache parallel geschaltete Lastbegrenzung vorgesehen, die in Kombination bei nicht angeschnallten großen Personen die hohe Last abbaut. Bei nicht angeschnallten schweren Fahrern ist eine wesentlich größere Lastaufnahme notwendig, als es heutzutage in der Praxis üblich ist. Heutige aus der Praxis bekannte Sicherheitslenksäulen sind beispielsweise in einem "Schlitten" (siehe Fig. 1, 2, 3a, 3b, 3c und 4 sowie zugehörige Beschreibung) gelagert. Dieser "Schlitten" bewegt sich bei Überschreitung einer konstruktiv festgelegten Lastgrenze gegen ein sich verformendes Blech, wodurch gemäß der vorliegenden Erfindung die hohe Lastspitze bei schweren Fahrern mit beiden Lastaufnehmern A und B abgebaut wird.

Bei angeschnallten großen Fahrern (erkennbar z.B. durch einen Schalter im Gurtschloss) wird bei einem Crash oder Unfall eine der beiden Lastbegrenzungen (z.B. der Lastaufnehmer A) außer Funktion gesetzt. Dies geschieht beispielsweise durch Entriegelung der Befestigung einer der Lastbegrenzungen durch einen Elektromagneten, einen pyrotechnisch entriegelbaren Bolzen o.ä.

Bei kleinen Fahrern (erkennbar z.B. durch einen Schalter in der Sitzschiene zur Lageabfrage) werden beide Lastaufnehmer A und B entriegelt und der Schlitten pyrotechnisch verfahren, um den nötigen Abstand zum explodierenden Airbag zu bekommen. Damit wird ein besonderer Vorteil der vorliegenden Erfindung erreicht.

Die Gewichtserkennung des großen Fahrers und die Positionserkennung z.B. einer kleinen Fahrerin können natürlich auch mittels elektronischer Gewichts- und Lagesensoren, die momentan vielerorts entwickelt werden, oder auf andere geeignete, dem Fachmann ohne weiteres bekannte oder zugängliche Arten ermittelt werden.

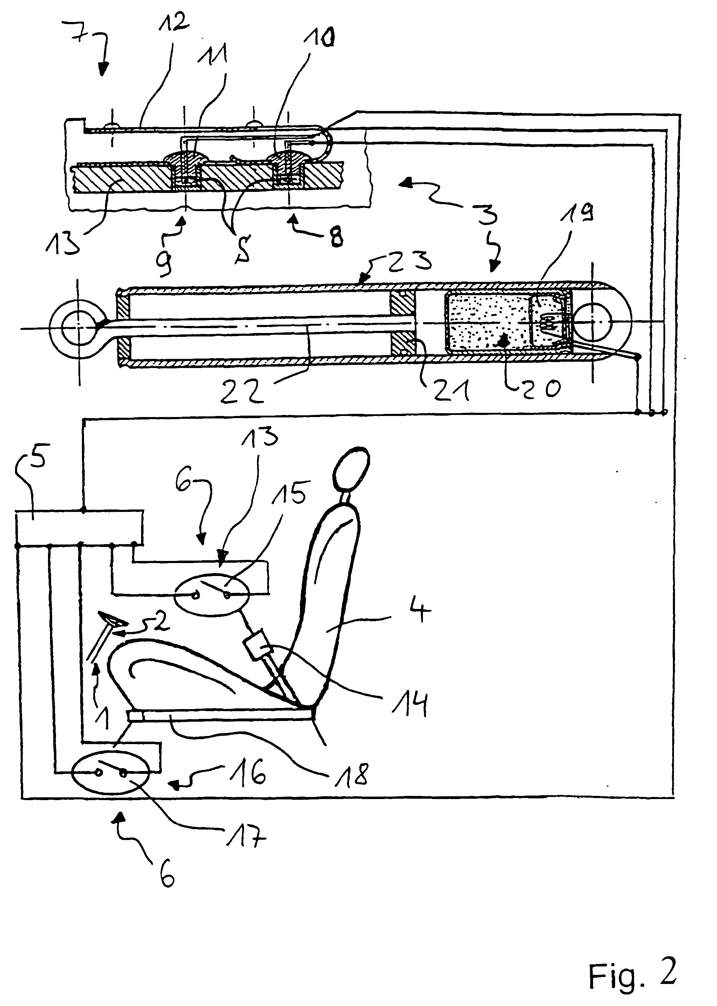

Die Fig. 2 verdeutlicht schematisch das Schaltschema des ersten Ausführungsbeispiels.

Eine nur angedeutet dargestellte Lenksäule 1 für ein Fahrzeug (nicht gezeigt) hat einen üblichen teleskopischen Aufbau, auf den wegen seiner Bekanntheit in zahlreichen Ausführungsformen hier nicht weiter eingegangen wird, da sich die vorliegende Erfindung bei allen bekannten Ausgestaltungen auch insgesamt rückziehbarer, nicht teleskopisch zusammenschiebbarer Lenksäulen anwenden läßt und die vorliegende Erfindung nicht die eigentliche Bauart solcher Lenksäulen betrifft. Die Lenksäule 1 hat einen Lenkrad-Endbereich 2 und ist mit Verstelleinrichtungen 3 versehen, die im Falle eines Unfalls auslösbar sind, um zumindest den Lenkrad-Endbereich 2 der Lenksäule 1 von einem Insassen (nicht gezeigt) weg zu bewegen, der auf einem Sitz 4 sitzt. Die Verstelleinrichtungen 3 sind für die drei in der Fig. verdeutlichten Betriebsmodi ausgelegt. Eine Steuerung 5 erfaßt mittels Detektionseinrichtungen 6 Insassenparameter und löst in Abhängigkeit von den Insassenparametern einen Betriebsmodus der Verstelleinrichtungen 3 aus.

Die Verstelleinrichtungen 3 enthalten Lastaufnahmeeinrichtungen 7 mit einem ersten und einem zweiten Lastaufnehmer oder -begrenzer 8 (A) bzw. 9 (B), die jeweils einen eigenen Bolzen 10 bzw. 11 und ein gemeinsames Lastaufnahmeblech 12 enthalten, die Deformationseinrichtungen (D) bilden. Durch die Bolzen 10 und 11 ist das Lastaufnahmeblech 12 mit einem Schlitten 13 verbunden. Das Lastaufnahmeblech 12 ist mit einem Teleskopteil (nicht gezeigt) der Lenksäule 1 fest verbunden, und der Schlitten 13 ist mit dem anderen Teleskopteil (nicht gezeigt) der Lenksäule 1 fest verbunden. Wird das Teleskopteil (nicht gezeigt) der Lenksäule 1, das den Lenkrad-Endbereich 2 enthält, durch einen auf das Lenkrad (nicht bezeichnet) auftreffenden Insassen (nicht dargestellt) belastet, so wird es in oder über das andere Teleskopteil geschoben. Diese Bewegung wird durch die Lasiaufnahmeeinrichtungen 7 gedämpft, da das Lastaufnahmeblech 12 selbst und/oder gegen die Bolzen 10 und 11 verformt werden muß.

Die Bolzen 10 und 11 verfügen jeweils über eine Sprengladung S, die von der Steuerung 5, die beispielsweise verbunden ist mit oder integriert ist in einer Gesamtsteuerung (nicht gezeigt) für einen Airbag, jeweils unabhängig voneinander elektrisch gezündet werden können, um jeden der Bolzen 10 und 11 entsprechend unwirksam zu machen. An die Steuerung 5 sind als Detektionseinrichtungen 6 Zustandserkennungseinrichtungen 13 eines Gurtschlosses 14 in Form eines Gurt- oder Schlossnutzungsschalters 15 angeschlossen. Dieser Gurtnutzungsschalter 15 führt zu einem Gurtnutzungssignal, wenn der Insasse seinen Sicherheitsgurt (nicht gezeigt) vorschriftsmäßig angelegt hat. Wird das Gurtnutzungssignal nicht erzeugt, so ist die Steuerung darüber informiert, dass der Insasse nicht ordnungsgemäß angeschnallt ist.

Weiterhin sind in den Detektionseinrichtemgen 6 Positionserkennungseinrichtungen 16 enthalten, die durch einen Positionsschalter 17 in einer Sitzschiene 18 des Sitzes 4 gebildet sind. Dieser Positionsschalter 17 führt zu einem Nahpositionssignal, wenn der Sitz 4 die Position des Positionsschalters 17 erreicht hat oder näher als der Positionsschalter 17 an der Lenksäule 1 ist. Dadurch erhält die Steuerung 5 die Information, dass es sich bei dem Insassen um eine kleine Person handelt. Wird das Nahpositionssignal nicht erzeugt, so ist die Steuerung darüber informiert, dass es sich bei dem Insassen um eine grosse Person handelt.

Durch die möglichen Kombinationen von Gurtnutzungssignal und Nahpositionssignal kann die Steuerung 5 jeden der drei Betriebsmodi der Verstelleinrichtungen 3 gemäß der Fig. 1 einstellen.

Hat die Steuerung 5 das Nahpositionssignal erhalten, so veranlaßt sie den Betriebsmodus für eine angeschnallte oder nicht angeschnallte "kleine Frau". In diesem Modus zündet die Steuerung 5 die Sprengladungen S der beiden Bolzen 10 und 11, so dass diese wirkungslos werden und das Lastaufnahmeblech 12 und der Schlitten 13 entkoppelt sind. Ferner zündet die Steuerung 5 einen pyrotechnischen Sprengsatz 19 eines Gasgenerators 20, und das von diesem erzeugte Gas beaufschlagt einen Kolben 21 mit einer Kolbenstange 22, die an das den Lenkrad-Endbereich 2 enthaltende Teleskopteil (nicht dargestellt) der Lenksäule 1 fest so angebunden ist, dass die beiden Teleskopteile (nicht dargestellt) der Lenksäule 5 zusammengezogen werden. Die Teile 19 bis 22 sind Bestandteile der Verstelleinrichtungen 3 und bilden zusammen Antriebseinrichtungen 23. Durch das Zusammenziehen oder Zurückziehen der Lenksäule 1 wird für die "kleine Frau", die relativ nahe am Lenkrad (nicht bezeichnet) sitzt, mehr Freiraum geschaffen, so dass sie von einem sich bei einem Unfall aufblasenden Airbag (nicht dargestellt) nicht oder zumindest nicht fest getroffen wird.

Hat die Steuerung 5 das Nahpositionssignal nicht erhalten, überprüft sie, ob das Gurtnutzungssignal gegeben ist. Liegt das Gurtnutzungssignal vor, so veranlaßt die Steuerung 5 den Betriebsmodus für einen angeschnallten "grossen Mann". In diesem Modus zündet die Steuerung 5 die Sprengladung S nur des Bolzens 11, so dass nur dieser wirkungslos wird und das Lastaufnahmeblech 12 und der Schlitten 13 noch durch den Bolzen 10 gekoppelt sind. Der Lastaufnehmer 8 (A) ist damit wirksam, um Energie abzubauen, die beim Aufprall des angeschnallten "grossen Mannes" auf das Lenkrad (nicht bezeichnet) auftritt. Die Antriebseinrichtungen 23 werden nicht ausgelöst.

Erhält die Steuerung 5 weder das Nahpositionssignal noch das Gurtnutumgssignal erhalten, so veranlaßt die Steuerung 5 den Betriebsmodus für einen unangeschnallten "grossen Mann". In diesem Modus zündet die Steuerung 5 keine Sprengladung S, so dass das Lastaufnahmeblech 12 und der Schlitten 13 durch beide Bolzen 10 und 11 gekoppelt sind. Der Lastaufnehmer 8 (A) und der Lastaufnehmer 9 (B) sind damit wirksam, um Energie abzubauen, die beim Aufprall des unangeschnallten "grossen Mannes" auf das Lenkrad (nicht bezeichnet) auftritt. Die Antriebseinrichtungen 23 werden nicht ausgelöst.

Signalleitungen zwischen der Steuerung 5 und den Sprengladungen S, dem pyrotechnischen Sprengsatz 19 sowie den Detektionseinrichtungen 6 sind als Linien oder Striche in der Fig. 2 eingezeichnet.

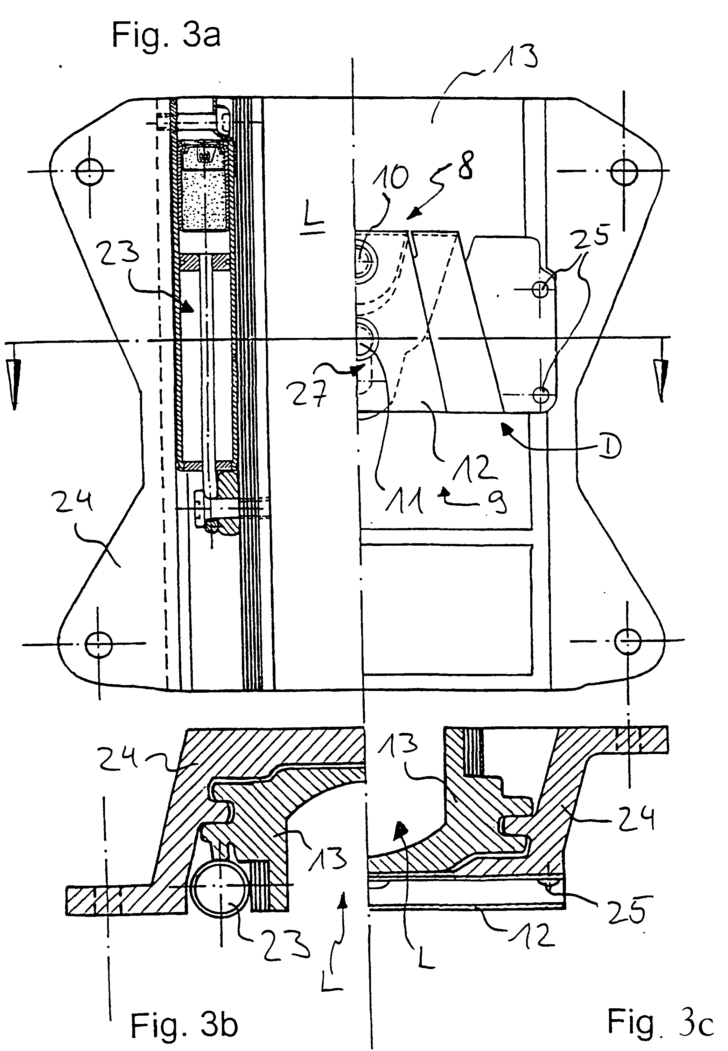

Die Fig. 3a, 3b und 3c zeigen einen Schlitten 13 zur Aufnahme der Lenkung (nicht gezeigt) in seiner Schlittenaufnahme 24 in der Fig. 3a links von unten und rechts von oben und in den Fig. 3b und 3c jeweils geschnitten. Der pyrotechnische Gasgenerator 20 der Antriebseinrichtungen 23 ist einerseits an der Schlittenaufnahme 24 und andererseits am Schlitten 13 befestigt.

Auf der rechten Seite der Fig. 3a sind der Lastaufnehmer 8 (A) und der Lastaufnehmer 9 (B) einstückig in Einbaulage gezeigt. Die Lastaufnehmer 8 und 9 sind einerseits mit den Bolzen 10 bzw. 11 am Schlitten 13 und andererseits an der Schlittenaufnahme 24 mit Verschraubungen 25 versehen. Der verschiebbare Teleskopteil (nicht gezeigt) der Lenksäule 1 wird in der Ausnehmung L fest montiert.

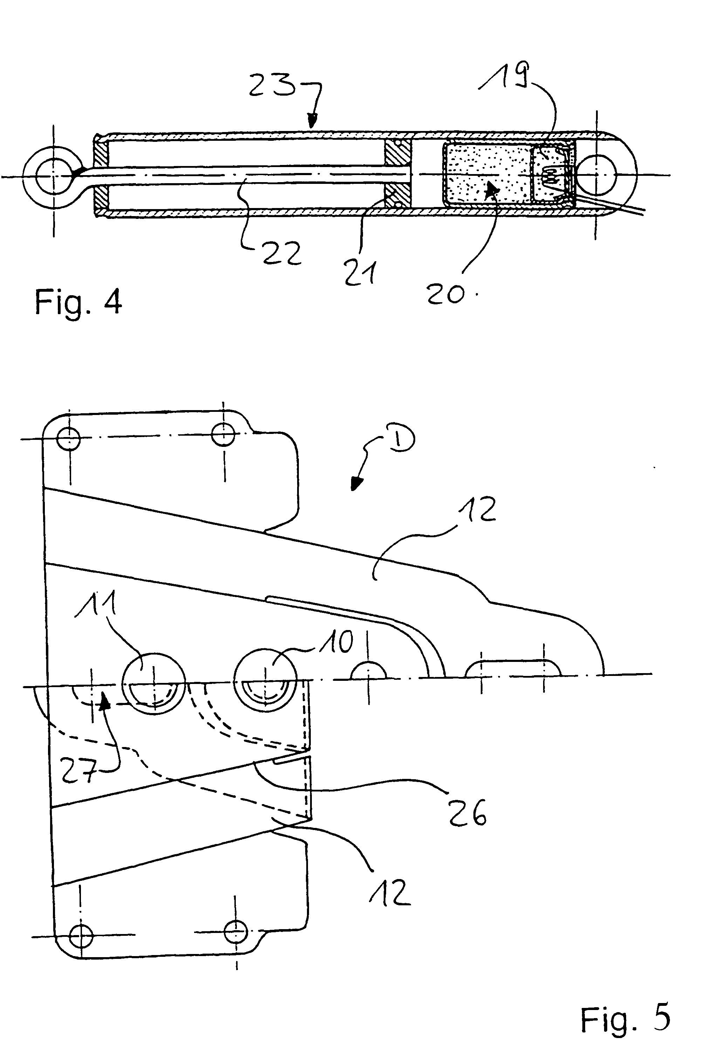

Die Antriebseinrichtungen 23 sind in der Fig. 4 gesondert dargestellt, wie sie bereits im Zusammenhang mit der Fig. 2 erläutert wurden.

Die Fig. 5 zeigt oben vor, d.h. in einem einbaufertigen Zustand, und unten nach einer Betätigung beider Lastaufnehmer 8 und 9 das Lastaufnahmeblech 12, bei dem es sich um ein Stanzteil handelt.

Als weitere erfinderische Besonderheit ist der Lastbegrenzer 8 (A) derart gestaltet, daß er mittels des Bolzens 10 sofort bei einer Lastüberschreitung an Reißlinien 26 einreißt. Dabei schiebt sich das Ende des Lastbegrenzers 8 (A) zwangsläufig über den Lastbegrenzer 9 (B), dessen Bolzen 11 sich vorerst in einem Schlitz 27 des Lastbegrenzers 9 (B) bewegt. Diese Auslegung führt in vorteilhafter Weise dazu, daß sich die Ausreißkräfte der beiden Lastaufnehmer 8 (A) und 9 (B) addieren. Würden sie parallel nebeneinander einreißen, würde nur einer der beiden Lastaufnehmer A oder B arbeiten.

Durch die Erfindung wird somit gemäß des ersten Ausführungsbeispiels insbesondere eine Sicherheitslenksäule mit einem Crashschlitten geschaffen, der zwei Lastaufnehmer hat, für angeschnallte und nicht angeschnallte große und kleine Personen. Gemäß einer bevorzugten Weiterbildung dieser Ausführung erfolgt eine Steuerung mit einem Schlossnutrungsschalter. In weiterer Fortbildung der Erfindung wird der Crashschlitten für die kleine Personen als "Abstandsschlitten" genutzt und werden seine Lastaufnehmer außer Betrieb gesetzt. Eine Feststellung kleiner Personen kann bevorzugt über eine elektrische Sitzlageerkennung erfolgen.

Besonders bevorzugt ist es gemäß der vorliegenden Erfindung, wenn die Lastaufnehmer derart hintereinander laufend gebaut sind, z.B. mittels eines Schlitzes in einer Anbindung, zum verzögerten Anlauf, daß sich die Lastaufnahmen bei der Last addieren.

Lediglich der Vollständigkeit halber wird noch darauf hingewiesen, dass die beiden Teleskopteile, wie z.B. ineinander gesteckte Rohre, der Lenksäule 1 im Normalbetrieb zwar einerseits fixiert sind, so dass sie nicht ohne weiteres zusammengeschoben werden können, dass aber diese Fixierung andererseits so schwach ist (z.B. Kunststoffbolzen), dass dadurch erstens keine merkliche Lastaufnahme für einen grossen (unangeschnallten) Fahrer erreicht werden kann, und zweitens der Rückzug der Lenksäule durch die Antriebseinrichtungen bei einem kleinen (angeschnallten) Fahrer nicht spürbar behindert wird. Dies gilt für das bereits erläuterte Ausführungsbeispiel ebenso, wie für das nachfolgend erläuterte zweite Ausführungsbeispiel.

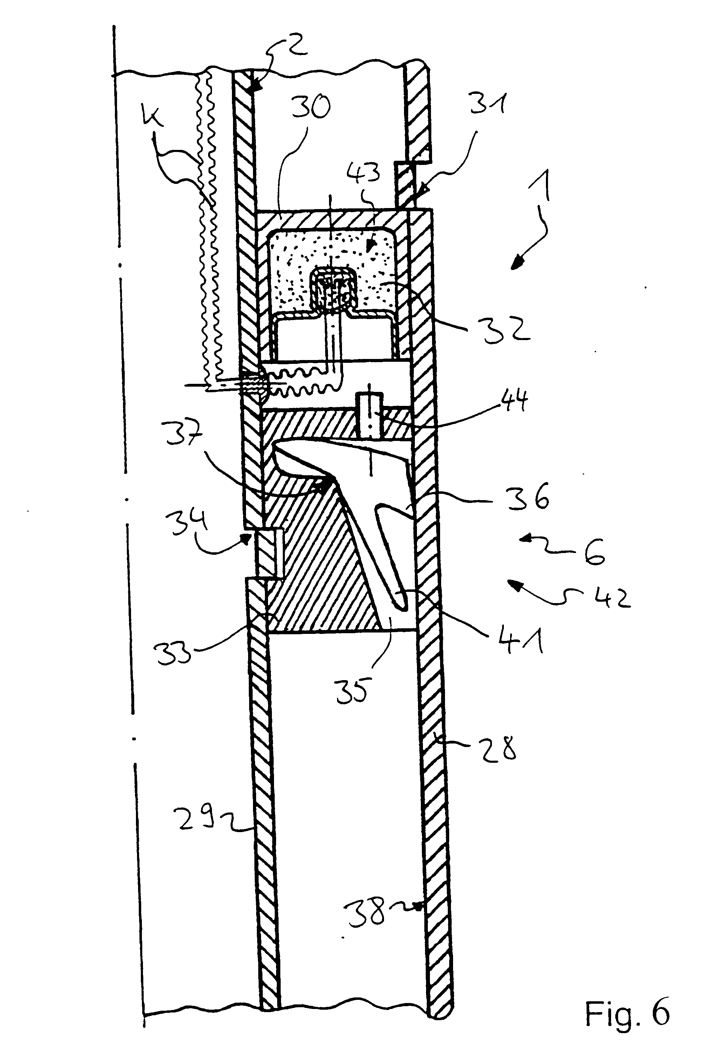

Unter Bezugnahme auf die Fig. 6 bis 8, denen weitere Einzelheiten und Angaben zu entnehmen sind, werden nachfolgend weitere Merkmale, Funktionen und Vorteile der vorliegenden Erfindung anhand eines zweitens Ausführungsbeispiels lediglich exemplarisch näher erläutert.

Insbesondere betrifft dieses Ausführungsbeispiel eine Sicherheitslenksäule mit pyrotechnisch angetriebener Verkürzung bei kleinen Fahrern und Lastspitzenabbau bei großen Fahrern. Heutige Lenksäulen sind zum Teil als Ergänzung zu einem Airbag bereits mit einem Lastspitzenabbau für schwere Personen ausgerüstet. Die Praxis hat ferner gezeigt, daß kleine und zu dicht am Airbag positionierte Fahrer teilweise durch diesen zu Tode kommen. Das zweite Ausführungsbeispiel schafft ebenfalls eine Lösung zum Lastspitzenabbau bei großen Fahrern und im gleichen System eine Lenksäulenverkürzung bei kleinen Fahrern bei einem Unfall.

Die Fig. 6 bis 8 zeigen ein Lenksäulenaussenrohr 28 und ein Lenksäuleninnenrohr 29, die die Teleskopteile einer Lenksäule 1 darstellen, wobei das Lenksäuleninnenrohr 29 den Lenkrad-Endbereich 2 der Lenksäule 1 enthält. An dem Lenksäulenaussenrohr 28 ist ein Aussenrohr-Ringkolben 30 beispielsweise durch eine Verclinchverbindung 31 befestigt. Der Aussenrohr-Ringkolben 30 enthält eine pyrotechnische Patrone 32, die mit Steuerkabeln K mit der Steuerung 5 (vergleiche Fig. 2) verbunden ist. Mit dem Lenksäuleninnenrohr 29 ist ein Innenrohr-Ringkolben 33 fest durch ebenfalls eine Verclinchverbindung 34 verbunden. Dieser Innenrohr-Ringkolben 33 enthält beim zweiten Ausführungsbeispiel ein oder mehrere in Schlitzen 35 gelagerte, entsprechend geformte Schneidemesser 36 als Teile von Deformationseinrichtungen 6. Die Schneidemesser 36 sind derart auf einem "Kipppunkt" 37 gelagert, daß sie bei Antrieb über den Innenrohr-Ringkolben 33 gezielt in die Wandung 38 des Lenksäulenaussenrohrs 28 der Lenksäule 1 einschneiden. Die Schneidtiefe 39 des Spanes 40 wird durch einen entsprechend geformten Anschlag 41 bestimmt. Die Größe des Spanes 40 ist proportional der gewünschten Lastaufnahme. Die Deformationseinrichtungen 6 bilden Lastaufnahmen 42.

Der Aussenrohr-Ringkolben 30 und der Innenrohr-Ringkolben 33 bilden Antriebseinrichtungen 23, die ebenso wie die Lastaufnahmen 42 Bestandteile der Verstelleinrichtungen 3 der Lenksäule 1 sind.

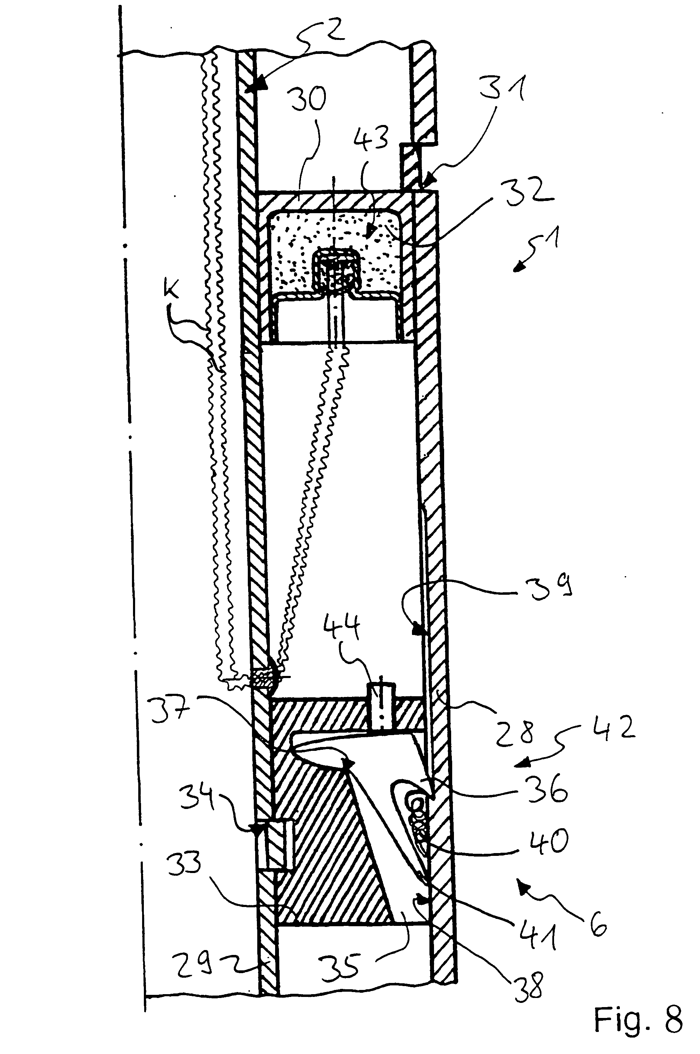

Die Fig. 8 zeigt eine entsprechende Lastaufnahme 42 in Funktion.

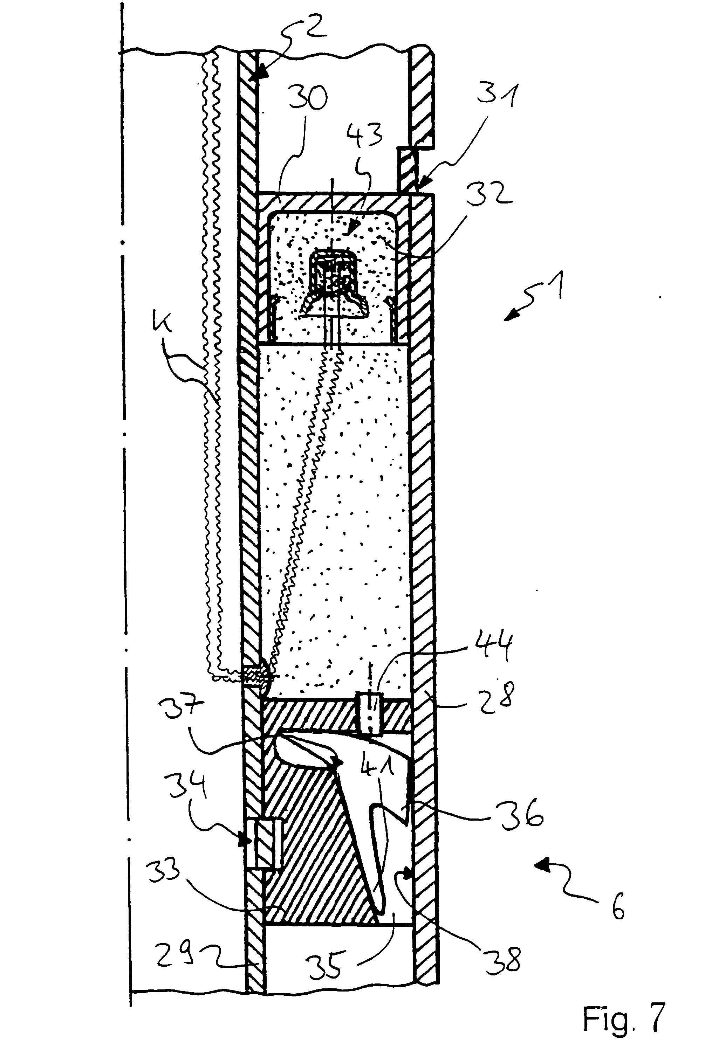

Die Fig. 7 zeigt die Funktion bei kleinen Fahrern. Hier drückt die Ladung 43 der pyrotechnische Patrone 32 den Innenrohr-Ringkolben 33 verbunden mit dem Lenksäuleninnenrohr 29 nach unten und damit von einem Insassen (nicht gezeigt) weg. Gleichzeitig verhindert ein vom Druck beaufschlagter Steuerstift 44 das Kippen des Schneidemessers 36 in die Stellung "Lastaufnahme", d.h. zur Spanabhebung in der Wandung 38 des Lenksäulenaussenrohrs 28 der Lenksäule 1.

Zusammenfassend läßt sich das in den Fig. 6 bis 8 verdeutlichte Ausführungsbeispiel der vorliegenden Erfindung folgendermaßen erläutern:

Ineinander schiebbare Lenksäulenrohre sind mit "Ringkolben" versehen, die bei kleinen Fahrern mittels eines pyrotechnischen Druckaufbaues dazwischen die Lenksäule verkürzen und damit einen sich aufblasenden Airbag auf eine größere Distanz bringen. In einem der Ringkolben ist eine lastaufnehmende Mechanik eingebaut, die bei großen Fahrern anstelle der Lenksäulenverkürzung wirksam wird und bei kleinen Fahrern mittels pyrotechnischem Druck außer Funktion gesetzt wird. Der zweite Ringkolben ist mit einer Lastaufnahmemechanik versehen. Im gezeigten Beispiel handelt es sich um entsprechend geformte und gelagerte kippbare Messer. Es kann sich hier ebenso um Wellrohre, materialverformende Kugeln o.ä. handeln (in den Figuren nicht gezeigt). Grundsätzlich ist die Funktion des lastaufnehmenden Ringkolbens derart, daß er automatisch Last aufnimmt und abbaut, wenn das innere Lenksäulenrohr relativ zum äußeren bewegt wird. Im gezeigten Fall wird das Messer spanabhebend in das äußere Lenksäulenrohr gedrückt. Alternativ kann diese Lastaufnahme bei einer pyrotechnischen Zündung bei entsprechender Leistung "überspielt" werden, oder wird das "Messer" wie im Beispiel durch einen druckbeaufschlagten Steuerstift außer Funktion gekippt.

Bei der Lenksäule eines Automobiles ist das innere und äußere Lenksäulenrohr beispielsweise auf möglichst großen Durchmesserunterschied ausgelegt. Wie es heute u.a. üblich ist, wird das äußere Lenksäulenrohr in Lagern positioniert (in den Figuren nicht gezeigt). Das innere Lenksäulenrohr ist zum äußeren formschlüssig mit entsprechenden Ringkolben (Nuten/Form) verbunden. Das Ringkolbenpaar ist z.B. durch Verclinchen mit je einem äußeren und je einem inneren Rohr verbunden. Ein Ringkolben beinhaltet eine pyrotechnische Ladung, deren Druck die Ringkolben voneinander weg drücken und damit die Lenksäule verkürzen bzw. das Lenkrad in Fahrtrichtung nach vorn vom Insassen weg ziehen kann.

Kleine Fahrer können auch bei dem zweiten Ausführungsbeispiel festgestellt werden z.B. durch entsprechende elektronische Überwachungssysteme oder eine Sitzpositionserkennung mittels Schaltern in der Sitzschiene.

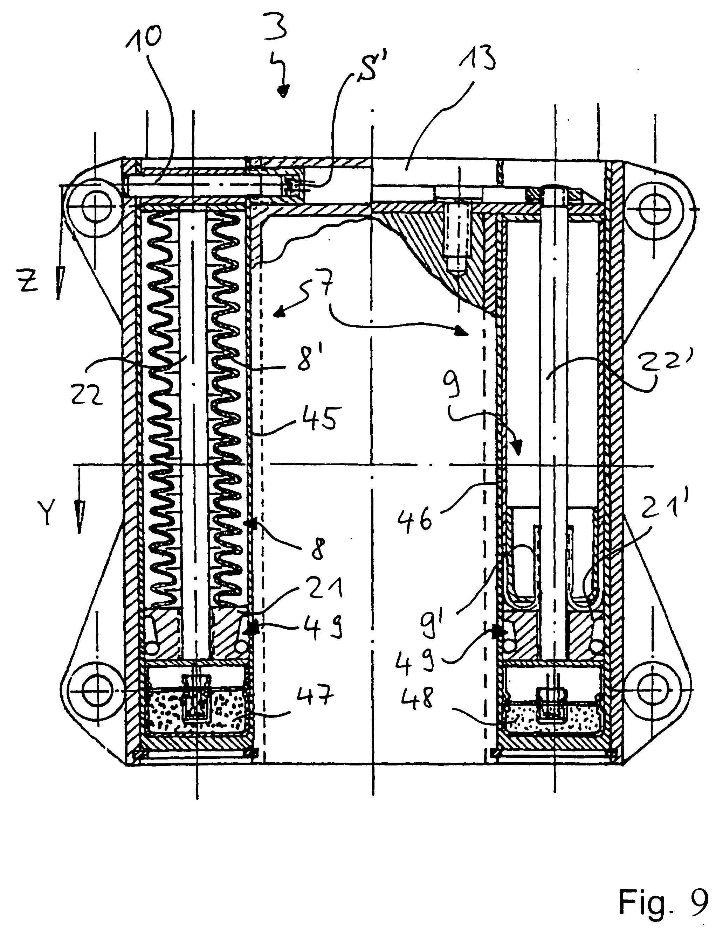

Unter Bezugnahme auf die Fig. 9, 10 und 11 werden nachfolgend weitere Merkmale, Funktionen und Vorteile der vorliegenden Erfindung anhand eines dritten Ausführungsbeispiels lediglich exemplarisch näher erläutert. Die Erfindung schafft im Umfang dieses Ausführungsbeispiels eine Sicherheitslenkäule für 7 Beanspruchungsarten im Falle eines Unfalls.

Auch diese Sicherheitslenksäule ist in einem bei Crash verfahrbaren Schlitten gelagert. Ein solcher "Schlitten" bewegt sich bei einer Überschreitung einer konstruktiv festgelegten Lastgrenze z.B. gegen ein sich verformendes Blech. Dabei wird die Lastspitze bei schweren Fahrern abgebaut.

Es können jedoch wesentlich mehr kritische "Lastfälle" als bei den vorangehend erläuterten Ausführungsbeispielen berücksichtigt werden, bei denen es sinnvoll ist, die Lenkung wegzuziehen bzw. andere Lastabsorbtionsgrößen einzusetzen.

Die Erfindung schafft im Rahmen des Ausführungsbeispiels gemäß den Fig. 9, 10 und 11 einen derartigen Schlitten, der mit zwei speziellen parallel zur Bewegung angeordneten insbesondere unterschiedlich starken Antriebszylindern bestückt ist. Jeder Zylinder ist für die aktive Bewegung mit unterschiedlichen pyrotechnischen, durch ein Steuergerät zündbaren Kartuschen bestückt. Bei Zündung übt deren explodierende Ladung Druck auf deren entsprechende Kolben aus und bewegt den Lenksäulenschlitten mit der daran befestigten Lenkung schlagartig nach vorn.

Bevor sich jedoch der Schlitten bewegen kann, müssen die beiden Lastaufnahmeelemente, die sich ebenfalls in den Zylindern befinden, an ihrer Auflage "entriegelt" werden, d.h. je ein Entriegelungsbolzen wird beispielsweise durch je eine pyrotechnische Ladung aus seiner Verriegelungslage entfernt.

Da es sich in beiden Zylindern um unterschiedlich starke pyrotechnische Ladungen handelt, ergeben sich hierdurch bei den Ausführungsbeispielen gemäß den Fig. 9, 10 und 11 drei unterschiedlich starke Bewegungen der Lenkung nach unten. Beide Ladungen parallel sind z.B. sinnvoll bei einer unangeschnallten kleinen 5 % Frau (d.h., daß nur etwa 5 % aller Frauen kleiner sind), um wegen des Todesrisikos bei zu nahem Airbag möglichst schnell einen großen Abstand zum explodierenden Airbag zu bekommen. Eine größere der beiden Ladungen ist evtl. sinnvoll bei einer kleinen angeschnallten Frau. Der "nähere" Airbag hat eine bessere Schutzwirkung. Die einzelne kleine Ladung ist evtl. sinnvoll für den nicht angeschnallten 50 % Mann (d.h. ein durchschnittlich großer Mann; etwa 50 % aller Männer sind größer und etwa 50 % aller Männer sind kleiner).

Die nächste Möglichkeit ist, keine pyrotechnische Ladung zu zünden und die beiden Lastaufnehmer zu entriegeln. Damit wird die Lenkung durch Aufschlag des Körpers beweglich, ohne mit Lastaufnehmern zu wirken. Das könnte ebenso bei einem unangeschnallten 50 % Mann sinnvoll sein.

Wenn man den größeren Lastaufnehmer entriegelt und nur den kleinen wirken läßt, ist dies evtl. sinnvoll für einen angeschnallten mittelgroßen 50 % Mann. Weiterhin erscheint der größere Lastaufnehmer alleine sinnvoll für einen großen angeschnallten 95 % Mann (d.h., 95 % aller Männer sind kleiner oder anders ausgedrückt, nur 5 % aller Männer sind größer).

Beide Lastabsorber parallel sollen die Lastspitze beim 95 % Mann abbauen, der nicht angeschnallt ist.

Ob die Insassen und insbesondere der Fahrer angeschnallt sind/ist oder nicht, kann beispielsweise mittels Schaltern im Gurtschloss erkannt werden. Wie groß und wie schwer die Insassen und insbesondere der Fahrer sind/ist, läßt sich z.B. mittels "Sitzbelegungsmatten", Gewichtssensoren oder UV- oder Infraroterkennung oder auf andere geeignete bekannte oder neuartige Weise feststellen. Eine weitere erfindungsgemäße einfache Version der Erkennung sind Schalter oder ein elektrisches Potentiometer in der Sitzschiene zu der Lageerkennung der Personen. Kleine Personen sitzen üblicherweise weiter vorne, große Personen weiter hinten.

Die vorstehend angegebenen Vorschläge dienen als Anhaltswert. Genaueres kann ohne weiteres erfinderisches Zutun durch Versuche ermittelt werden.

In der Fig. 9 sind z.B. unterschiedliche Lastaufnehmer 8 (A) und 9 (B) gezeigt, einer als Wellrohr 8' (Lastaufnehmer 8) und ein anderer als "Stülprohr" 9' (Lastaufnehmer 9), um unterschiedliche Lastaufnahmekennlinien bedarfsgerecht zur Verfügung zu stellen. Das Wellrohr 8' hat höhere Lastaufnahme- oder -abbaufähigkeiten als das Stülprohr 9'.

Eine erfinderische Weiterbildung besteht in der Ausführung der Kolben. Die Kolben haben eine Rücklaufsperre. Bei den oben erstgenannten Lastfällen, bei denen die Lenkung nach vom geschossen wird, werden die Lastaufnehmer entriegelt und treten ungenutzt in einem Teil ihrer Länge aus dem Schlittenführungsgehäuse aus. In der Endphase eines Unfalles bewegt sich u.U. die Spitzwand oder die Spritzwand in Richtung Lenkung. Die Kolben mit Rücklaufsperre verhindern ein Rückschieben der Lenkung nach hinten. Die Lastaufnehmer werden in diesem Fall ohne Bezug zum Unfallgeschehen außerhalb des Schlittengehäuses zerdrückt oder weggebogen.

Das in den Fig. 9, 10 und 11 dargestellte Beispiel von Verstelleinrichtungen 3 zeigt einen Schlitten 13 zwei Zylindern 45 und 46 mit entsprechenden zwei pyrotechnischen Antriebsladungen 47 bzw. 48 und den zwei Lastaufnehmern 8 (A) bzw. 9 (B) als Lastaufnahmeeinrichtungen 7. Selbstverständlich gilt das Gezeigte ebenso für einen oder mehr als zwei Zylinder, Ladungen und/oder Lastbegrenzer.

Der Schlitten 13 in der Fig. 9 ist so an eine Teleskop-Lenksäule (nicht gezeigt) gekoppelt, dass sein Verschieben zu einem Zusammenziehen der Teleskopteile der Lenksäule führt. Das Verschieben des Schlittens 13 kann entweder durch Auslösen wenigstens einer der zwei pyrotechnischen Antriebsladungen 47 und 48 aktiv betrieben werden, wobei dann jeder entsprechende Bolzen 10 und/oder 11 beispielsweise mit Ladungen S' bzw. S" geeignet entriegelt wird, oder durch eine äußere Krafteinwirkung einer auf das zugehörige Lenkrad (nicht gezeigt) auftreffenden Person, wobei dann die Bolzen 10 und/oder 11 wie vorstehend beschrieben in solcher Weise entriegelt werden, dass einer oder beide der Lastaufnehmer 8 (A) und 9 (B) wirken, die unterschiedlich ausgelegt sind.

Die pyrotechnischen Antriebsladungen 47 und 48 haben verschiedene Stärken, so dass drei unterschiedliche Antriebsversionen des Schlittens 13 der Verstelleinrichtungen 3 durch die Steuerung 5 betrieben werden können:
1. geringerer Antrieb des Schlittens 13 durch Auslösen nur der kleinen pyrotechnischen Antriebsladung oder Patrone 47,
2. mittelmäßiger Antrieb des Schlittens 13 durch Auslösen nur der größeren pyrotechnischen Antriebsladung oder Patrone 48, und
3. größerer Antrieb des Schlittens 13 durch Auslösen beider pyrotechnischer Antriebsladungen oder Patronen 47 und 48.

Durch gezieltes Auslösen einer oder beider der Ladungen S' bzw. S" zum Entriegeln des jeweils entsprechenden Bolzens 10 bzw. 11 können unterschiedliche Verzögerungen des Schlittens 13 der Verstelleinrichtungen 3 mittels der Lastaufnahmeeinrichtungen 7 realisiert werden, wobei keine der Antriebsladungen 47 und 48 gezündet oder allgemein ausgelöst wird:
1. keine Verzögerung des Schlittens 13 durch Auslösen beider Ladungen S' und S", so dass keiner der Lastaufnehmer 8 (A) und. 9 (B) wirkt,
2. geringere Verzögerung des Schlittens 13 durch Auslösen nur der Ladung S', so dass nur der schwächer verzögernde Lastaufnehmer 9 (B) wirkt,
3. mittelmäßige Verzögerung des Schlittens 13 durch Auslösen nur der Ladung S", so dass nur der stärker verzögernde Lastaufnehmer 8 (A) wirkt, und
4. höhere Verzögerung des Schlittens 13 durch Auslösen keiner der Ladungen S' und S", so dass beide der Lastaufnehmer 8 (A) und 9 (B) wirken.

Durch Kombination von Auslösung wenigstens einer der beiden pyrotechnischen Antriebsladungen oder Patronen 47 und 48 mit nicht entriegelten Lastaufnehmern 8 (A) und. 9 (B) können weitere Feinabstimmungen der Verstelleinrichtungen 3 ohne sonderlichen weiteren Aufwand erreicht werden können.

Zum Verschieben des Schlittens 13 wirken die gezündeten Antriebsladungen oder Patronen 47 und 48 auf Kolben 21 bzw. 21' mit jeweils einer Kolbenstange 22 bzw. 22' auf ein rückziehbares Teleskopteil (nicht gezeigt) der Teleskop-Lenksäule (nicht gezeigt). Um nach einer solchen Verschiebung des Schlittens 13 eine Bewegung der Teleskop-Lenksäule (nicht gezeigt) ganz oder teilweise zurück in den Fahrgastraum (nicht gezeigt) eines entsprechend ausgestatteten Fahrzeuges hinein zu verhindern, sind die Kolben 21 bzw. 21'jeweils mit einer Rücklaufsperre 49 ausgestattet. Da auch bei einer Verschiebung des Schlittens 13 durch eine äußere Krafteinwirkung einer auf das zugehörige Lenkrad (nicht gezeigt) auftreffenden Person eine Verstellung der Kolben 21 bzw. 21' erfolgt, wirken auch ein jedem dieser Fälle die Rücklaufsperren 49.

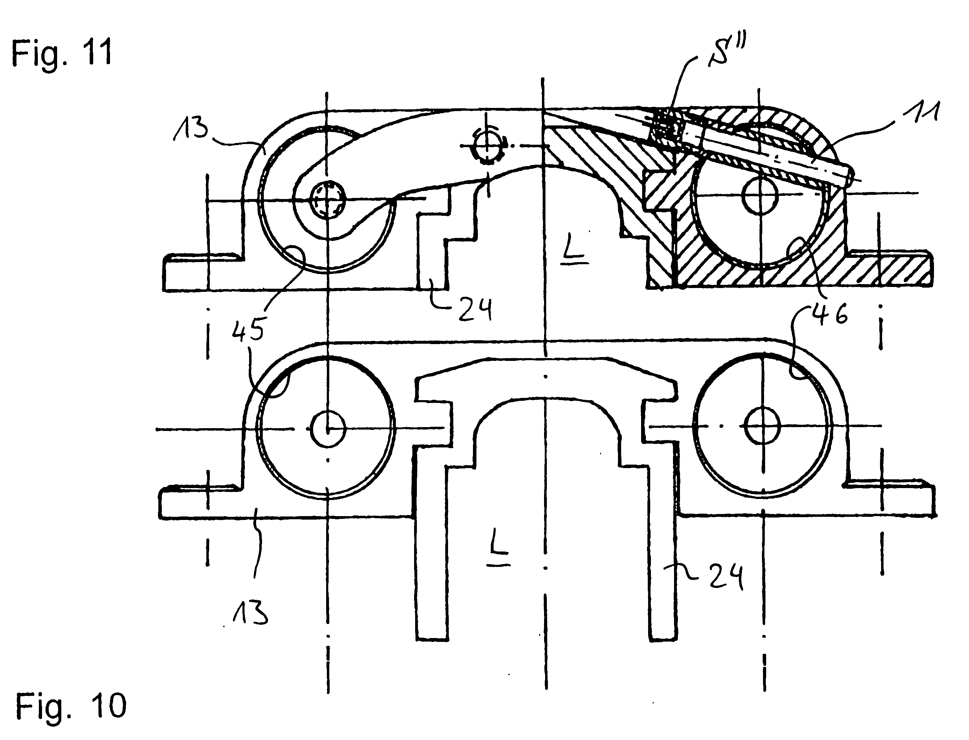

In der Fig. 9 sind ferner Schnittlinien Y und Z eingezeichnet, längs denen die Fig. 10 bzw. 11 zu verstehen sind. In den Fig. 10 und 11 sind gut der Schlitten 13 selbst und die Schlittenaufnahme 24 zu erkennen, die gegeneinander verschiebbar sind und von denen ein Teil mit einem fahrzeugfesten Teleskopteil (nicht gezeigt) der Teleskop-Lenksäule (nicht gezeigt) und das andere Teil mit einem verschiebbaren Teleskopteil (nicht gezeigt) der Teleskop-Lenksäule (nicht gezeigt) fest verbunden ist. Das fahrzeugfesten Teleskopteil (nicht gezeigt) der Teleskop-Lenksäule (nicht gezeigt) wird in der Ausnehmung L fest montiert

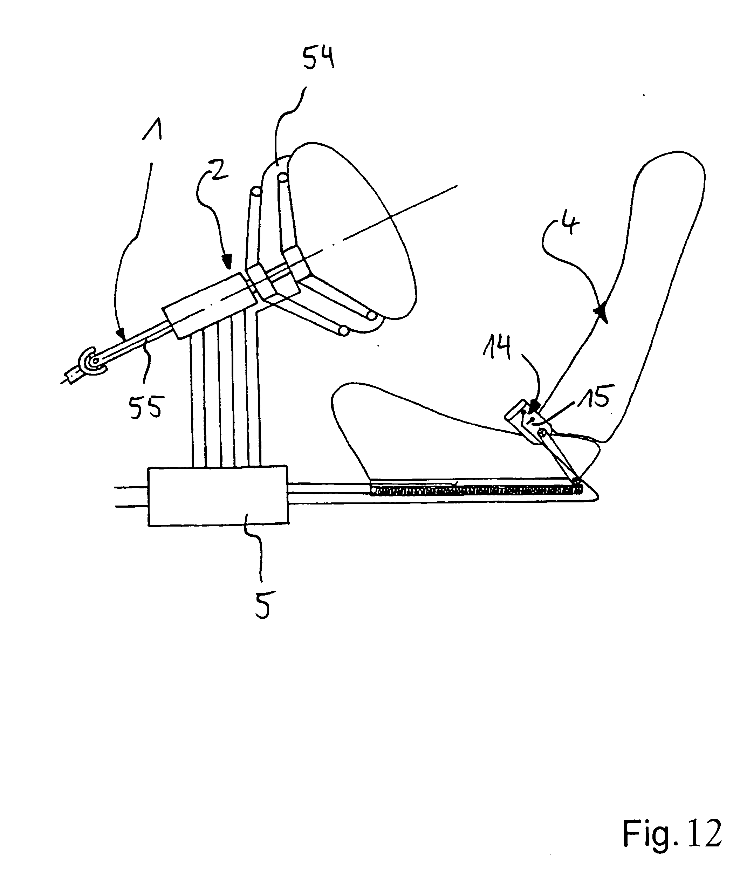

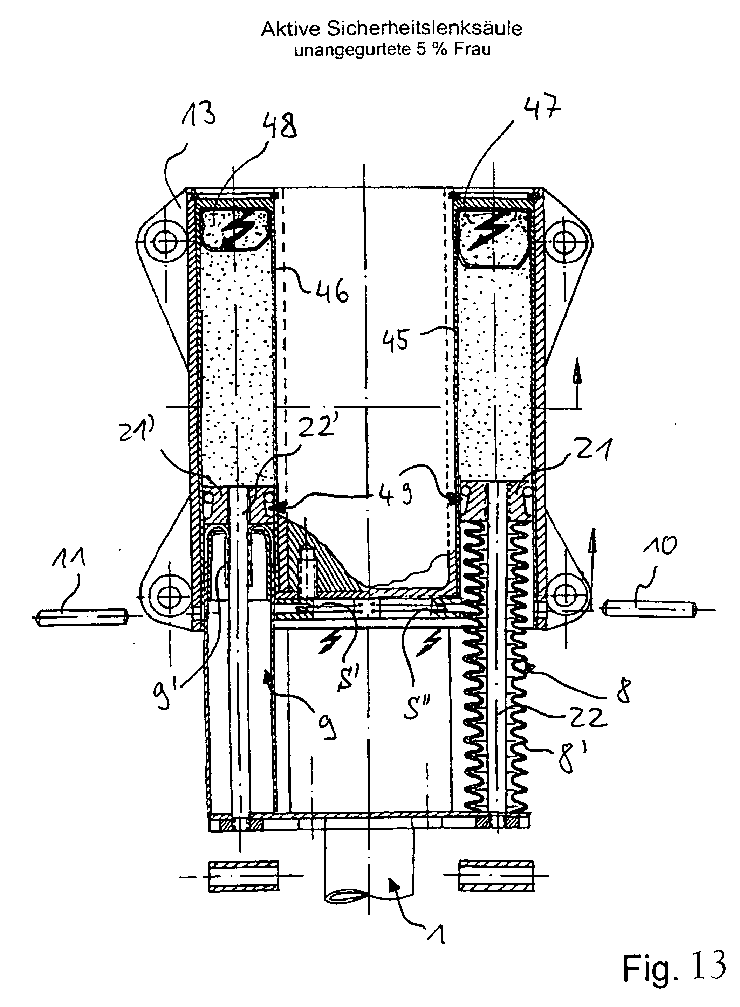

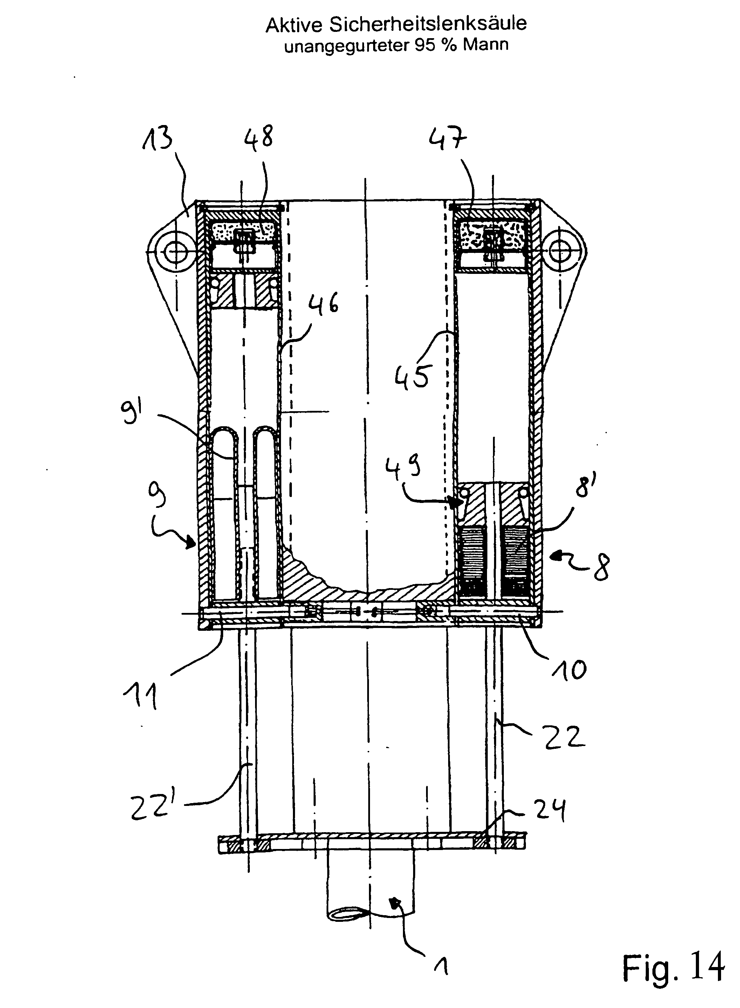

In der Fig. 12 sind die Lenksäule 1 mit einem Lenkrad 54 an ihrem Lenkrad-Endbereich 2 sowie der Sitz 4 und die Steuerung 5 gezeigt. Das Lenkrad 54 und entsprechend dasjenige Teleskopteil (nicht bezeichnet), das den Lenkrad-Endbereich 2 bildet und sich gegenüber dem anderen unteren Teleskopteil 55 der Teleskop-Lenksäule 1 verschieben läßt, ist in zwei Stellung eingezeichnet, die den Betriebsmodi entsprechen, die in den Fig. 13 und 14 dargestellt sind. Für eine ungegurtete 5 % Frau werden die beiden Bolzen 10 und 11 entriegelt, so das keiner der beiden Lastaufnehmer 8 und 9 wirkt, und werden beide pyrotechnischen Antriebsladungen 47 und 48 ausgelöst, so dass das Lenkrad 54 schnellstmöglich und weitestmöglich von der Insassin weggezogen wird. Dies entspricht der Darstellung in der Fig. 13 und in der Fig. 12 der Lenkradstellung, bei der das Lenkrad 54 weiter vom Sitz 4 weg ist (d.h., sich in der Fig. 12 weiter links befindet). Die Situation für einen unangegurteten 95 % Mann ist in der Fig. 14 und in der Fig. 12 mit der Lenkradstellung dargestellt, bei der das Lenkrad 54 näher am Sitz 4 ist (d.h., sich in der Fig. 12 weiter rechts befindet). In diesem Fall wird keine der beiden beide pyrotechnischen Antriebsladungen 47 und 48 ausgelöst, so dass das Lenkrad 1 nicht aktiv vom Fahrer weg bewegt wird, und bleiben beide Lastaufnehmer 8 und 9 wirksam, indem die Bolzen 10 und 11 beide nicht entriegelt werden, um für eine maximale Lastabsorption beim Auftreffen des Fahrers oder seines Kopfes auf das Lenkrad 1 zu sorgen. Nicht berücksichtigt sind in der Fig. 12 unterschiedliche Entfernungen des Sitzes 4 von dem unteren Teleskopteil 55 der Lenksäule 1 in den Fällen der unangegurteten 5 % Frau und des unangegurteten 95 % Mannes.

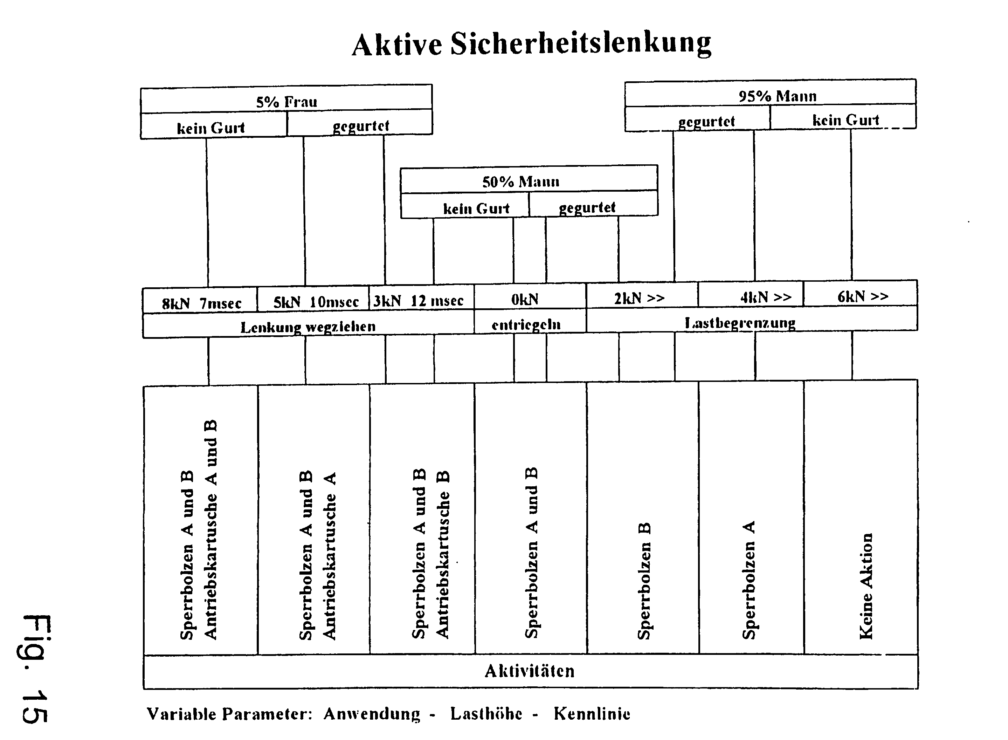

Die vorgenannten und weitere Betriebsfälle der Lenksäule 1 sind in dem Schema der Fig. 15 veranschaulicht. "Sperrbolzen A und B" bedeutet dabei, dass beide Bolzen 10 und 11 durch Zünden der Ladungen S' und S" entriegelt werden, so dass keiner der beiden Lastaufnehmer 8 und 9 wirkt. Entsprechend bedeuten "Sperrbolzen A" und "Sperrbolzen B", dass nur der Bolzen 10 (Ladung S') bzw. nur der Bolzen 11 (Ladung S") entsprechend entriegelt werden, so dass entsprechend nur der schwächer verzögernde Lastaufnehmer 9 (B) oder der stärker verzögernde Lastaufnehmer 8 (A) wirkt. "Antriebskartusche A und B" bedeutet, dass beide pyrotechnischen Antriebsladungen oder Patronen 47 und 48 ausgelöst werden, so dass eine maximale Lenkradverstellung erfolgt. Entsprechend bedeuten "Antriebskartusche A" und "Antriebskartusche B", dass nur die größere pyrotechnische Antriebsladung oder Patrone 48 bzw. nur die kleinere pyrotechnische Antriebsladung oder Patrone 47 ausgelöst wird. Eine größere Ladung bedeutet eine stärkere und damit auch schnellere Beaufschlagung des entsprechenden Kolbens und damit einen weitergehenden und/oder schnelleren Rückzug des Lenkrades vom Insassen weg.

Zusammenfassend ermöglicht die vorliegende Erfindung eine Sicherheitslenksäule, die bei Crash beispielsweise gemäß dem dritten Ausführungsbeispiel bis zu siebenfach unterschiedlich reagieren kann, wie die nachfolgende Tabelle an einem realistischen Beispiel zeigt.

**Tabelle I**

| Lenkungsbewegung 100 mm mit beispielsweise 7 Lastalternativen gemäß der Erfindung (Kennlinie nach Bedarf oder Wunsch) | |
|---|---|
| Sicherheitsverstellung | Anwendungsfall |
| Lenkung mit 8 kN Zugkraft nach vorn | 5 % Frau nicht angeschnallt |
| Lenkung mit 5 kN Zugkraft nach vom | 5 % Frau angeschnallt |
| Lenkung mit 5 kN Zugkraft nach vom | 1. Alternative für 50 % Mann nicht angeschnallt |
| 0 kN Zugkraft oder Lastaufnahme; Lenkung entriegelt | 2. Alternative für 50 % Mann nicht angeschnallt |
| Lenkungsvorwärtsbewegung mit erstem Lastaufnehmer mit 2 kN gebremst | 50 % Mann angeschnallt |
| Lenkungsvorwärtsbewegung mit zweitem Lastaufnehmer mit 4 kN gebremst | 95 % Mann angeschnallt |
| Lenkungsvorwärtsbewegung mit beiden Lastaufnehmern mit 6 kN gebremst | 95 % Mann nicht angeschnallt |

Die neue Vorschrift FMVSS 208 und noch weitere Crashtestarten fordern verbesserte Werte bei angeschnallten und nicht angeschnallten Insassen und insbesondere Fahrern. Vor allem bei kleinen Frauen/Fahrerinnen muß ein ausreichender Abstand bei der Airbagzündung gegeben sein, um einen Genickbruch durch einen auslösenden Airbag zu vermeiden. 25 % aller nach 9/2002 in den USA zugelassenen Fahrzeuge müssen die neuen Richtlinien insbesondere nach der Vorschrift FMVSS 208 erfüllen. In Europa ist dies spätestens auch dann aus Wettbewerbsgründen erforderlich.

Bei großen, schweren Fahrern, vor allem, wenn sie nicht angegurtet sind, reicht der Airbag nicht mehr aus. Die Lenksäule muß dann zusätzlich Energie absorbieren. Ferner sind grundsätzlich besonders bei unangegurteten Insassen und insbesondere Fahrern Zusatzmaßnahmen erforderlich.

Die vorliegende Sicherheitslenkung beinhaltet gegenüber früheren Lastaufnahmen (maßgeschneidert nur für den angeschnallten 95 % Mann) z.B. weitere 6 Möglichkeiten, bei einem Crash positiv auf den Fahrer einzuwirken. Hierzu wird mit einem Schalter im Gurtschloss "angeschnallt" oder "nicht angeschnallt" festgestellt. Eine entsprechende Ausrüstung ist in zukünftigen Fahrzeugen beispielsweise gleichzeitig zur Feststellung einer Airbagzündschwelle einsetzbar. Weiterhin können zukünftige Fahrzeuge ohne weiteres mit Gurtverwendungs-, Sitzbelegungs-, Gewichts- und Positionserkennung der Insassen- und insbesondere des Fahrersitzes ausgerüstet werden.

In Verbindung beispielsweise mit einem auch auf den vorliegenden Anmelder/Inhaber zurückgehenden Airbagsystem, bei dem eine vom Airbagdruck unabhängige Mechanik einen den Airbag, solange er nicht ausgelöst wurde, abdeckenden Deckel öffnet, damit der Airbag "weich" austreten kann, ist es möglich, daß z.B. lediglich ein Potentiometer beispielsweise in einer Fahrersitzschiene für die Erkennung der Fahrergröße (s. Bild aktive Airbagklappe) ausreicht.

Nach Erkennung der Fahrergröße und dessen Anschnallsituation wird eine der 7 Crashoptimierungen geschaltet (s. Tabelle I und auch Fig. 15). Bei einem unangeschnallten kleinen Fahrer wird die Lenkung z.B. mit 8 kN kurz vor der Ausbreitung des Airbags innerhalb von ca. 5 msec. bis zu 100 mm vom Kopf weggezogen. Hierzu werden beide Kolben pyrotechnisch nach vom getrieben und die Lastbegrenzer durch pyrotechnische Sperrbolzen zur Wirkungslosigkeit entriegelt Am oberen Ende der Skala werden dem unangeschnallten großen Mann 2 Lastabsorber (z.B. zusammen 6 kN) zugewiesen. Die Sperrbolzen für dis Lastbegrenzer werden nicht entriegelt, und die Lenkung wird auch nicht nach unten gezogen, indem die pyrotechnischen Kartuschen nicht gezündet werden. Fünf weitere mögliche Schaltungen liegen zwischen diesen beiden Extremen (s. Tabelle I und Fig. 15),

Das Wegziehen der Lenkung muß konstruktiv möglich sein. Der Zündschlüssel sollte auch wegen eines möglichen Knieaufschlages auf die Schaltkonsole verlegt werden.

Zu beachten ist, dass eine Reduzierung des Abstandes eines Insassen und insbesondere eines Fahrers bis zu einem Aufschlag um 1 cm ohne die vorliegende Erfindung mindestens 1 kg Strukturmaßnahmen im oberen Vorderbau eines Fahrzeuges bedeuten würde. Die Sicherheitslenkung gemäß der vorliegenden Erfindung realisiert dies besser mit geringerem Gewicht und geringeren Kosten.

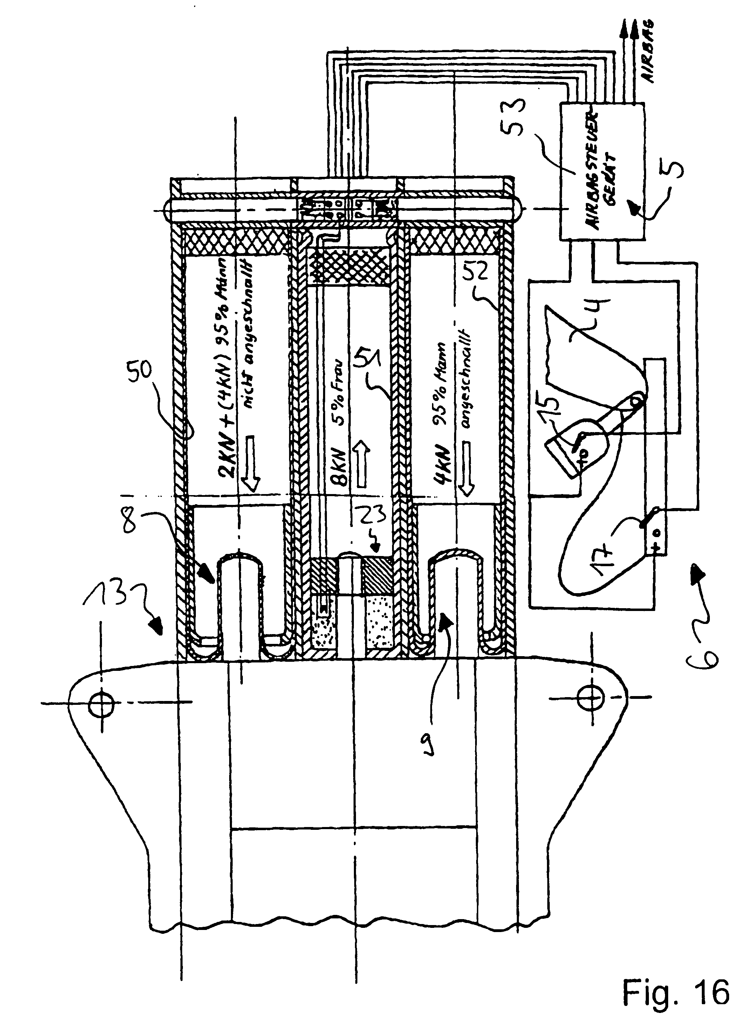

Die Fig. 16 zeigt eine weitere Alternative der Erfindung als viertes Ausführungsbeispiel mit drei Rohren oder Zylindern 50, 51 und 52 in am Lenkungsschlitten 13 angesetzter Ausführung. In dem Rohr 50 ist ein stärkerer Lastaufnehmer 8 (A) untergebracht. Ein schwächerer Lastaufnehmer 9 (B) sitzt im Rohr 52 und Antriebseinrichtungen 23 wirken im Rohr 51. Damit können wenigstens drei verschiedene Lastaufnahmestufen plus eine Betriebsart ohne Lastaufnahme und ohne aktive Lenkradrückziehung sowie ein Betriebsmodus mit einer aktiven Lenkradrückziehung realisiert werden. Beispiele für die verschiedenen Fälle sind in der Fig. 12 angegeben. Weiterhin sind schematisch teilweise der Sitz 4 und Detektionseinrichtungen 6 mit einem Gurtnutzungsschalter 15 und einem Positionsschalter 17, die an ein Airbagsteuergerät 53 angeschlossen sind, das die Steuerung 5 enthält und auch die Auslösung eines Airbags (nicht gezeigt) steuert, gezeigt.

Zusammenfassend ermöglicht die vorliegende Erfindung u.a. einzeln oder in Kombination eine Sicherheitslenksäule und deren Betrieb, wobei bei einem Crash eine Anpassung an drei Anforderungen möglich ist:
1. Die Lenksäule "reagiert" auf die konkrete Insassensituation.
2. Die Lenksäule deckt den vollen Bereich von 5 % Frau bis 95 % Mann angegurtet und unangegurtet ab.
3. Kleinere Personen haben mehr Airbagabstand, oder anders ausgedrückt besteht für eine 5 % Frau ein größerer Airbageinsatzraum.
4. Bei großen unangeschnallten Personen erfolgt großer Lastspitzenabbau, oder anders ausgedrückt wird eine übermäßige Belastung für einen 95 % Mann absorbiert.

Dies wird erreicht durch eine Steuerung der Lenkrad-Vorwärtsbewegung (vom Insassen weg) nach Kraft/Zeit in beispielsweise 4 Stufen und durch z.B. eine dreistufige Lenkrad-Lastabsorbiercharakteristik.

## Patentansprüche

1. Lenksäule für ein Fahrzeug, mit Verstelleinrichtungen (3), die im Falle eines Unfalls auslösbar sind, um zumindest einen Lenkrad-Endbereich (2) der Lenksäule (1) von einem Insassen weg zu bewegen, und für wenigstens zwei Betriebsmodi ausgelegt sind, wobei
- eine Steuerung (5) zum Erfassen von Insassenparametern mittels Detektionseinrichtungen (6) und Auslösen eines Betriebsmodus der Verstelleinrichtungen (3) in Abhängigkeit von den Insassenparametern vorgesehen ist,
- die Verstelleinrichtungen (3) Antriebseinrichtungen (23) zum Bewirken der Bewegung zumindest des Lenkrad-Endbereiches (2) der Lenksäule (1) von einem Insassen weg enthalten, und die Antriebseinrichtungen (23) im Falle eines Unfalls von der Steuerung (5) in Abhängigkeit von den Insassenparametern auslösbar sind, und
- die Verstelleinrichtungen (3) Lastaumahmeeinrichtungen (7) zum Dämpfen einer Bewegung zumindest des Lenkrad-Endbereiches (2) der Lenksäule (1) von einem Insassen weg enthalten, und die Lastaufnahmeeinrichtungen (7) im Falle eines Unfalls von der Steuerung (5) in Abhängigkeit von den Insassenparametern direkt oder indirekt betreibbar sind,
**dadurch gekennzeichnet,**
**dass** die Antriebseinrichtungen (23) ausgelegt sind, unterschiedlich starke Bewegungen zumindest des Lenkrad-Endbereiches (2) der Lenksäule (1) von einem Insassen weg auf Veranlassung der Steuerung (5) in Abhängigkeit von den Insassenparametern auszuführen, und
**dass** die Lastaufnahmeeinrichtungen (7) ausgelegt sind, unterschiedlich starke Dämpfungen einer Bewegung zumindest des Lenkrad-Endbereiches (2) der Lenksäule (1) von einem Insassen weg auf Veranlassung der Steuerung (5) in Abhängigkeit von den Insassenparametern auszuführen.

2. Lenksäule nach Anspruch 1, **dadurch gekennzeichnet, dass** die Antriebseinrichtungen einen pyrotechnischen Gasgenerator (20; 32) enthalten und/oder elektrisch auslösbar sind.

3. Lenksäule nach Anspruch 1 oder 2, **dadurch gekennzeichnet, dass** die Lastaufnahmeeinrichtungen (7) wenigstens zwei Stufen (A, B) enthalten, die im Falle eines Unfalls von der Steuerung (5) in Abhängigkeit von den Insassenparametern direkt oder indirekt betreibbar sind, wobei vorzugsweise die Stufen (A, B) der Lastaufuahmeeinrichtungen (7) einzeln mit insbesondere jeweils unterschiedlichen Lastaufnahmeeigenschaften und/oder gleichzeitig mit addierten Lastanfnahmeeigenschaften betreibbar sind.

4. Lenksäule nach einem der vorhergehenden Ansprüche, **dadurch gekennzeichnet, dass** die Lastaufnahmeeinrichtungen (7) oder ggf. jede Stufe (A, B) davon einzeln im Falle eines Unfalls von der Steuerung (5) in Abhängigkeit von den Insassenparametern direkt oder indirekt abschaltbar sind.

5. Lenksäule nach einem der vorhergehenden Ansprüche, **dadurch gekennzeichnet, dass** die Lastaufnahmeeinrichtungen (7) oder ggf. eine Stufe (A, B) davon Deformationseinrichtungen (6), insbesondere mit längs eines Bewegungsweges spanabhebenden Schneidmessern (36) und/oder materialdeformierenden Bolzen (10, 11), und/oder Bremseinrichtungen, insbesondere einen Bremsschlitten mit vorzugsweise wenigstens zwei Bremskraftstufen, enthalten.

6. Lenksäule nach einem der vorhergehenden Ansprüche, **dadurch gekennzeichnet, dass** die Steuerung (5) zum Erfassen der Sitzposition, des Angurtzustandes, der Grösse, des Gewichts und/oder der Körperhaltung des Insassen mittels der Detektionseinrichtungen (6) ausgelegt ist.

7. Lenksäule nach Anspruch 6, **dadurch gekennzeichnet, dass** die Steuerung (5) zum Auslösen der Antriebseinrichtungen (23) in Abhängigkeit von der Sitzposition des Insassen ausgelegt ist.

8. Lenksäule nach Anspruch 7, **dadurch gekennzeichnet, dass** die Steuerung (5) zum Erfassen eines vorgebbaren Abstandes oder einer Unterschreitung eines vorgebbaren Abstandes der Position des Sitzes (4) für den Insassen vom Lenkrad mittels der Detektionseinrichtungen (6) ausgelegt ist.

9. Lenksäule nach Anspruch 8, **dadurch gekennzeichnet, dass** die Steuerung (5) zum Auslösen eines solchen Betriebsmodus der Verstelleinrichtungen (3) ausgelegt ist, bei dem im Falle eines Unfalls bei einem erfaßten vorgebbaren Abstand oder einer erfaßten Unterschreitung eines vorgebbaren Abstandes der Position des Sitzes (4) für den Insassen vom Lenkrad die Anthebseinrichtungen (23) der Verstelleinrichtungen (3) ausgelöst werden.

10. Lenksäule nach Anspruch 8 oder 9, **dadurch gekennzeichnet, dass** die Steuerung (5) zum Betreiben der Lastaufnahmeeinrichtungen (7) oder ggf. jeder Stufe (A, B) davon einzeln in Abhängigkeit vom Angurtzustand und/oder der Sitzposition des Insassen ausgelegt ist.

11. Lenksäule nach Anspruch 10, **dadurch gekennzeichnet, dass** die Steuerung (5) zum Auslösen eines solchen Betriebsmodus der Verstelleinrichtungen (3) ausgelegt ist, bei dem im Falle eines Unfalls bei einem nicht angegurteten Insassen die Lastaufnahmeeinrichtungen (7) oder zumindest eine Stufe (A, B) davon wirksam sind/ist.

12. Lenksäule nach Anspruch 10 oder 11, **dadurch gekennzeichnet, dass** die Steuerung (5) zum Auslösen eines solchen Betriebsmodus der Verstelleinrichtungen (3) ausgelegt ist, bei dem im Falle eines Unfalls bei einem erfaßten vorgebbaren Abstand oder einer erfaßten Unterschreitung eines vorgebbaren Abstandes der Position des Sitzes (4) für den Insassen vom Lenkrad die Lastaufnahmeeinrichtungen (7) oder zumindest eine Stufe (A, B) davon unwirksam sind/ist.

13. Lenksäule nach einem der vorhergehenden Ansprüche, **dadurch gekennzeichnet, dass** die Detektionseinrichtungen (6) Positionserkennungseinrichtungen (16) des Sitzes (4) für den Insassen, Zustandserkennungseinrichtungen (13) des Gurtschlosses (14) für den Anschnallgurt des Insassen, Grössen-, Gewichts- und/oder Körperhaltungserkennungseinrichtungen bezüglich des Insassen enthalten.

14. Lenksäule nach Anspruch 13, **dadurch gekennzeichnet, dass** die Positionserkennungseinrichtungen (16) des Sitzes (4) für den Insassen wenigstens einen elektrischen oder optischen Schalter (17) in oder im Zusammenhang mit Sitzführungsschienen (18) enthalten, und/oder dass die Zustandserkennungseinrichtungen (13) des Gurtschlosses (14) für den Anschnallgurt des Insassen wenigstens einen elektrischen oder optischen Schloßnutzungsschalter (15) enthalten.

15. Verstellverfahren für eine Lenksäule eines Fahrzeuges, wobei im Falle eines Unfalls zumindest ein Lenkrad-Endbereich (2) der Lenksäule (1) mittels Verstelleinrichtungen (3) von einem Insassen weg bewegt wird, wobei mittels Detektionseinrichtungen (6) Insassenparameter erfaßt werden, und die Bewegung zumindest des Lenkrad-Endbereiches (2) der Lenksäule (1) vom Insassen weg in Abhängigkeit von den Insassenparametern gemäß einem Betriebsmodus von mehreren Betriebsmodi der Verstelleinrichtungen (3) erfolgt, wobei
- Antriebseinrichtungen (23) der Verstelleinrichtungen (3) zum Bewirken der Bewegung zumindest des Lenkrad-Endbereiches (2) der Lenksäule (1) vom Insassen weg im Falle eines Unfalls in Abhängigkeit von den Insassenparametern ausgelöst werden, oder
- eine Bewegung zumindest des Lenkrad-Endbereiches (2) der Lenksäule (1) von einem Insassen weg im Falle eines Unfalls in Abhängigkeit von den Insassenparametern gedämpft wird,
**dadurch gekennzeichnet,**
**dass** die Antriebseinrichtungen (23) in Abhängigkeit von den Insassenparametern unterschiedlich starke Bewegungen zumindest des Lenkrad-Endbereiches (2) der Lenksäule (1) von einem Insassen weg bewirken, und
**dass** die Dämpfungen einer Bewegung zumindest des Lenkrad-Endbereiches (2) der Lenksäule (1) von einem Insassen weg in Abhängigkeit von den Insassenparametern unterschiedlich stark erfolgt.

16. Verstellverfahren für eine Lenksäule nach Anspruch 15, **dadurch gekennzeichnet, dass** eine Dämpfung der Bewegung zumindest des Lenkrad-Endbereiches (2) der Lenksäule (1) von einem Insassen weg im Falle eines Unfalls in Abhängigkeit von den Insassenparametern insbesondere wahlweise in einzelnen Stufen (A, B) abgeschaltet wird.

17. Verstellverfahren für eine Lenksäule nach Anspruch 15 oder 16, **dadurch gekennzeichnet, dass** die Sitzposition, der Angurtzustand, die Grösse, das Gewicht und/oder die Körperhaltung des Insassen als Insassenparameter erfaßt werden/wird.

18. Verstellverfahren für eine Lenksäule nach Anspruch 17, **dadurch gekennzeichnet, dass** die Verstelleinrichtungen (3) in Abhängigkeit von der Sitzposition des Insassen angetrieben werden.

19. Verstellverfahren für eine Lenksäule nach Anspruch 18, **dadurch gekennzeichnet, dass** die Verstelleinrichtungen (3) im Falle eines Unfalls bei einem erfaßten vorgebbaren Abstand oder einer erfaßten Unterschreitung eines vorgebbaren Abstandes der Position des Sitzes (4) für den Insassen vom Lenkrad gemäß einem Betriebsmodus nicht angetrieben werden.

20. Verstellverfahren für eine Lenksäule nach einem der Ansprüche 17 bis 19, **dadurch gekennzeichnet, dass** die Verstelleinrichtungen (3) in Abhängigkeit vom Angurtzustand und/oder von der Sitzposition des Insassen gedämpft werden.

21. Verstellverfahren für eine Lenksäule nach Anspruch 20, **dadurch gekennzeichnet, dass** die Verstelleinrichtungen (3) im Falle eines Unfalls bei einem nicht angegurteten Insassen gemäß einem Betriebsmodus ganz oder teilweise gedämpft werden.

22. Verstellverfahren für eine Lenksäule nach Anspruch 20 oder 21, **dadurch gekennzeichnet, dass** die Verstelleinrichtungen (3) im Falle eines Unfalls bei einem erfaßten vorgebbaren Abstand oder einer erfaßten Unterschreitung eines vorgebbaren Abstandes der Position des Sitzes (4) für den Insassen vom Lenkrad gemäß einem Betriebsmodus ganz oder teilweise gedämpft werden.

## Claims

1. Steering column for a vehicle, with adjusting devices (3) which can be triggered in the event of an accident in order to move at least a steering wheel end region (2) of the steering column (1) away from an occupant, said adjusting devices (3) being designed for at least two operating modes wherein:
- a control unit (5) is provided for recording occupant parameters by means of detection devices (6) and triggering an operating mode of the adjusting devices (3) according to the occupant parameters,
- the adjusting devices (3) contain drive devices (23) for carrying out the movement at least of the steering wheel end region (2) of the steering column (1) away from an occupant, and in the event of an accident the drive devices (23) can be triggered by the control unit (5) according to the occupant parameters, and
- the adjusting devices (3) contain load bearing devices (7) for cushioning a movement of at least the steering wheel end region (2) of the steering column (1) away from an occupant, and in the event of an accident the load bearing devices (7) can be directly or indirectly operated by the control unit (5) according to the occupant parameters,
**characterised in that**
the drive devices (23) are designed to carry out different strength movements of at least the steering wheel end region (2) of the steering column away from an occupant when triggered by the control unit (5) according to the occupant parameters, and
the load bearing devices (7) are designed to carry out differing levels of cushioning of a movement of at least the steering wheel end region (2) of the steering column (1) away from an occupant when triggered by the control unit (5) according to the occupant parameters.

2. Steering column according to Claim 1, **characterised in that** the drive devices contain a pyrotechnical gas generator (20; 32) and / or can be electrically triggered.

3. Steering column according to Claim 1 or 2, **characterised in that** the load bearing devices (7) contain at least two stages (A, B) which in the event of an accident can be operated directly or indirectly by the control unit (5) according to the occupant parameters, wherein the stages (A, B) of the load bearing devices (7) can be operated individually with in particular differing load bearing properties and / or simultaneously with added load bearing properties.

4. Steering column according to one of the preceding claims, **characterised in that** the load bearing devices (7) or possibly each stage (A, B) thereof can in the event of an accident be switched off directly or indirectly by the control unit (5) according to the occupant parameters.

5. Steering column according to one of the preceding claims, **characterised in that** the load bearing devices (7) or possibly each stage (A, B) thereof contain deformation devices (6), in particular with cutting knives (36) which cut along a movement path and / or material deforming bolts (10, 11) and / or brake devices, in particular a brake carriage with preferably at least two brake power stages.

6. Steering column according to one of the preceding claims, **characterised in that** the control unit (5) is designed to record the seat position, the seatbelt status, the size, the weight and / or the posture of the occupant by means of the detection devices (6).

7. Steering column according to Claim 6, **characterised in that** the control unit (5) is designed to trigger the drive devices (23) according to the seat position of the occupant.

8. Steering column according to Claim 7, **characterised in that** the control unit (5) is designed to record a specified distance or the exceeding of a specified distance of the position of the occupant seat (4) from the steering wheel by means of the detection devices (6).

9. Steering column according to Claim 8, **characterised in that** the control unit (5) is designed to trigger such an operating mode of the adjusting devices (3) that in the event of an accident if a specified distance is recorded or falling short of the specified distance of the position of the occupant seat from the steering wheel is recorded the drive devices (23) of the adjusting devices (3) are triggered.

10. Steering column according to Claim 8 or 9, **characterised in that** the control unit (5) is designed to operate the load bearing devices (7) or possibly each stage (A, B) thereof individually according to the seatbelt status and / or the seat position of the occupant.

11. Steering column according to Claim 10, **characterised in that** the control unit (5) is designed to trigger such an operating mode of the adjusting devices (3) that in the event of an accident if an occupant is not wearing a seatbelt the load bearing devices (7) or at least one stage (A, B) thereof is / are effective.

12. Steering column according to Claim 10 or 11, **characterised in that** the control unit (5) is designed to trigger such an operating mode of the adjusting devices (3) that in the event of an accident if a specified distance is recorded or falling short of a specified distance is recorded for the position of the occupant seat from the steering wheel the load bearing devices (7) or at least one stage (A, B) thereof is / are ineffective.

13. Steering column according to one of the preceding claims, **characterised in that** the detection devices (6) contain position recognition devices (16) of the occupant seat (4), status recognition devices (13) of the seatbelt lock (14) for the seatbelt of the occupant, size, weight and or posture recognition devices relating to the occupant.

14. Steering column according to Claim 13, **characterised in that** the position recognition devices (16) of the occupant seat (4) contain at least one electrical or optical switch (17) in association with seat guiding tracks (18) and / or the status recognition devices (13) of the seatbelt lock (14) for the seatbelt of the occupant contain at least one electrical or optical lock service switch (15).

15. Adjusting method for a steering column of a vehicle, in which in the event of an accident at least a steering wheel end region (2) of the steering column (1) is moved away from an occupant by means of adjusting devices, in which occupant parameters are recorded by means of detection devices (6) and the movement of at least the steering wheel end region (2) of the steering column (1) away from the occupant takes place according to the occupant parameters in line with one operating mode of several operating modes of the adjusting devices (3), wherein
- drive devices (23) of the displacement devices (3) are triggered for carrying out the movement of at least the steering wheel end region (2) of the steering column (1) away from the occupant in the event of an accident according to the occupant parameters, or
- a movement of at least the steering wheel end region (2) of the steering column (1) away from an occupant in the event of an accident is cushioned according to the occupant parameters, or
**characterised in that**
the drive devices (23) bring about different levels of movement of at least the steering wheel end region (2) of the steering column (1) away from an occupant according to the occupant parameters,
and that the cushioning of a movement of at least the steering wheel end region (2) of the steering column (1) away from an occupant is effected to a differing extent according to the occupant parameters.

16. Adjusting method for a steering column according to Claim 15, **characterised in that** cushioning of the movement of at least the steering wheel end region (2) of the steering column (1) away from an occupant in the event of an accident is switched off according to the occupant parameters, in particular optionally in individual stages (A, B).

17. Adjusting method for a steering column according to Claim 15 or 16, **characterised in that** the seat position, the seatbelt status, the size, the weight and / or the posture of the occupant is / are recorded as occupant parameters.

18. Adjusting method for a steering column according to Claim 17, **characterised in that** the adjusting devices (3) are operated according to the seat position of the occupant.

19. Adjusting method for a steering column according to Claim 18, **characterised in that** the adjusting devices (3) are not operated according to an operating mode in the event of an accident if a specified distance has been recorded or falling short of a specified distance of the position of the occupant seat (4) from the steering wheel is recorded.

20. Adjusting method for a steering column according to one of the Claims 17 to 19, **characterised in that** the adjusting devices (3) are cushioned according to the seatbelt status and / or the seat position of the occupant.

21. Adjusting method for a steering column according to Claim 20, **characterised in that** the adjusting devices (3) are completely or partially cushioned in the event of an accident if an occupant is not wearing a seatbelt according to an operating mode.

22. Adjusting method for a steering column according to Claim 20 or 21, **characterised in that** the adjusting devices (3) are completely or partially cushioned in the event of an accident if a specified distance is recorded or falling short of a specified distance of the occupant seat (4) from the steering wheel is recorded according to an operating mode.

## Revendications

1. Colonne de direction pour un véhicule, comportant des dispositifs de déplacement (3) qui sont susceptibles d'être déclenchés en cas d'accident pour déplacer au moins une zone d'extrémité côté volant (2) de la colonne de direction (1) en éloignement d'un occupant, et qui sont conçus pour au moins deux modes de fonctionnement,
dans laquelle
- une commande (5) est prévue pour saisir des paramètres relatifs aux occupants au moyen de dispositifs de détection (6) et pour déclencher un mode de fonctionnement des dispositifs de déplacement (3) en fonction des paramètres relatifs aux occupants,
- les dispositifs de déplacement (3) comprennent des dispositifs d'entraînement (23) pour provoquer le mouvement au moins de la zone d'extrémité côté volant (2) de la colonne de direction (1) en éloignement d'un occupant, et en cas d'accident les dispositifs d'entraînement (23) sont susceptibles d'être déclenchés par la commande (5) en fonction des paramètres relatifs aux occupants, et
- les dispositifs de déplacement (3) comprennent des dispositifs d'encaissement de charge (7) pour amortir un mouvement au moins de la zone d'extrémité côté volant (2) de la colonne de direction (1) en éloignement d'un occupant, et en cas d'accident les dispositifs d'encaissement de charge (7) sont susceptibles d'être mis en marche directement ou indirectement par la commande (5) en fonction des paramètres relatifs aux occupants,
**caractérisée en ce que**
les dispositifs d'entraînement (23) sont conçus pour exécuter des mouvements de différentes intensités au moins de la zone d'extrémité côté volant (2) de la colonne de direction (1) en éloignement d'un occupant à la demande de la commande (5) en fonction des paramètres relatifs aux occupants, et
les dispositifs d'encaissement de charge (7) sont conçus pour exécuter des amortissements de différentes intensités d'un mouvement au moins de la zone d'extrémité côté volant (2) de la colonne de direction (1) en éloignement d'un occupant à la demande de la commande (5) en fonction des paramètres relatifs aux occupants.

2. Colonne de direction selon la revendication 1, **caractérisée en ce que** les dispositifs d'entraînement comprennent un générateur de gaz pyrotechnique (20 ; 32) et/ou sont susceptibles d'être déclenchés par voie électrique.

3. Colonne de direction selon l'une ou l'autre des revendications 1 et 2, **caractérisée en ce que** les dispositifs d'encaissement de charge (7) comprennent au moins deux étages (A, B) qui, en cas d'accident, sont susceptibles d'être mis en marche directement ou indirectement par la commande (5) en fonction des paramètres relatifs aux occupants, et de préférence les étages (A, B) des dispositifs d'encaissement de charge (7) sont susceptibles d'être mis en marche individuellement en particulier chacun avec des propriétés d'encaissement de charge différentes et/ou simultanément avec des propriétés d'encaissement de charge additionnées.

4. Colonne de direction selon l'une des revendications précédentes, **caractérisée en ce qu'**en cas d'accident les dispositifs d'encaissement de charge (7) ou le cas échéant chaque étage (A, B) de ceux-ci sont susceptibles d'être mis à l'arrêt directement ou indirectement par la commande (5) en fonction des paramètres relatifs aux occupants.

5. Colonne de direction selon l'une des revendications précédentes, **caractérisée en ce que** les dispositifs d'encaissement de charge (7) ou le cas échéant un étage (A, B) de ceux-ci comprennent des dispositifs à déformation (6), en particulier avec des couteaux de coupe (36) pour enlever de la matière le long d'un trajet de déplacement, et/ou des goujons à déformation de matériau (10, 11), et/ou des dispositifs de freinage, en particulier un chariot de freinage comprenant de préférence au moins deux étages d'effort de freinage.

6. Colonne de direction selon l'une des revendications précédentes, **caractérisée en ce que** la commande (5) est conçue pour détecter la position assise, l'état d'application de ceinture, la taille, le poids et/ou la posture corporelle de l'occupant au moyen des dispositifs de détection (6).

7. Colonne de direction selon la revendication 6, **caractérisée en ce que** la commande (5) est conçue pour déclencher les dispositifs d'entraînement (23) en fonction de la position assise de l'occupant.

8. Colonne de direction selon la revendication 7, **caractérisée en ce que** la commande (5) est conçue pour détecter au moyen des dispositifs de détection (6) une distance prédéterminée ou un passage au-dessous d'une distance prédéterminée entre la position du siège (4) de l'occupant et le volant.

9. Colonne de direction selon la revendication 8, **caractérisée en ce que** la commande (5) est conçue pour déclencher un tel mode de fonctionnement des dispositifs de déplacement (3), pour lequel, en cas d'accident, les dispositifs d'entraînement (23) des dispositifs de déplacement (3) sont déclenchés lors de la détection d'une distance prédéterminée ou d'un passage au-dessous d'une distance prédéterminée entre la position du siège (4) de l'occupant et le volant.

10. Colonne de direction selon l'une ou l'autre des revendications 8 et 9, **caractérisée en ce que** la commande (5) est conçue pour mettre en marche les dispositifs d'encaissement de charge (7) ou le cas échéant chaque étage (A, B) de ceux-ci individuellement en fonction de l'état d'application de ceinture et/ou de la position assise de l'occupant.

11. Colonne de direction selon la revendication 10, **caractérisée en ce que** la commande (5) est conçue pour déclencher un tel mode de fonctionnement des dispositifs de déplacement (3), pour lequel, en cas d'accident, les dispositifs d'encaissement de charge (7) ou au moins un étage (A, B) de ceux-ci est/sont efficace(s), si l'occupant n'a pas appliqué sa ceinture.

12. Colonne de direction selon l'une ou l'autre des revendications 10 et 11, **caractérisée en ce que** la commande (5) est conçue pour déclencher un tel mode de fonctionnement des dispositifs de déplacement (3), pour lequel, en cas d'accident, les dispositifs d'encaissement de charge (7) ou au moins un étage (A, B) de ceux-ci est/sont inactif(s), lors de la détection d'une distance prédéterminée ou d'un passage au-dessous d'une distance prédéterminée entre la position du siège (4) de l'occupant et le volant.

13. Colonne de direction selon l'une des revendications précédentes, **caractérisée en ce que** les dispositifs de détection (6) comprennent des dispositifs de reconnaissance de position (16) du siège (4) pour l'occupant, des dispositifs de reconnaissance d'état (13) de la serrure de ceinture (14) pour la ceinture de sécurité de l'occupant, et des dispositifs de reconnaissance de taille, de poids et/ou de posture corporelle de l'occupant.

14. Colonne de direction selon la revendication 13, **caractérisée en ce que** les dispositifs de reconnaissance de position (16) du siège (4) pour l'occupant comprennent au moins un commutateur électrique ou optique (17) dans ou en relation avec des rails de guidage de siège (18), et/ou **en ce que** les dispositifs de reconnaissance d'état (13) de la serrure de ceinture (14) pour la ceinture de sécurité de l'occupant comprennent au moins un commutateur électrique ou optique d'utilisation de serrure (15).

15. Procédé de déplacement d'une colonne de direction d'un véhicule, dans lequel, en cas d'accident, au moins une zone d'extrémité côté volant (2) de la colonne de direction (1) est déplacée en éloignement d'un occupant au moyen de dispositifs de déplacement (3), des paramètres relatifs aux occupants sont saisis au moyen de dispositifs de détection (6), et le mouvement au moins de la zone d'extrémité côté volant (2) de la colonne de direction (1) en éloignement de l'occupant s'effectue en fonction des paramètres relatifs aux occupants selon un mode de fonctionnement parmi plusieurs modes de fonctionnement des dispositifs de déplacement (3),
dans lequel
- des dispositifs d'entraînement (23) des dispositifs de déplacement (3) pour provoquer le mouvement au moins de la zone d'extrémité côté volant (2) de la colonne de direction (1) en éloignement de l'occupant sont déclenchés en cas d'accident en fonction des paramètres relatifs aux occupants, ou
- un mouvement au moins de la zone d'extrémité côté volant (2) de la colonne de direction (1) en éloignement de l'occupant est amorti en cas d'accident en fonction des paramètres relatifs aux occupants,
**caractérisé en ce que**
les dispositifs d'entraînement (23) provoquent des mouvements, d'intensités différentes en fonction des paramètres relatifs aux occupants, au moins de la zone d'extrémité côté volant (2) de la colonne de direction (1) en éloignement d'un occupant, et
les amortissements d'un mouvement au moins de la zone d'extrémité côté volant (2) de la colonne de direction (1) en éloignement d'un occupant s'effectue à des intensités différentes en fonction des paramètres relatifs aux occupants.

16. Procédé de déplacement d'une colonne de direction selon la revendication 15, **caractérisé en ce qu'**un amortissement du mouvement au moins de la zone d'extrémité côté volant (2) de la colonne de direction (1) en éloignement d'un occupant en cas d'accident en fonction des paramètres relatifs aux occupants est arrêté en particulier au choix par étages individuels (A, B).

17. Procédé de déplacement d'une colonne de direction selon l'une ou l'autre des revendications 15 et 16, **caractérisé en ce que** la position assise, l'état d'application de ceinture, la taille, le poids et/ou la posture corporelle de l'occupant est/sont détecté(es) comme paramètres relatifs aux occupants.

18. Procédé de déplacement d'une colonne de direction selon la revendication 17, **caractérisé en ce que** les dispositifs de déplacement (3) sont entraînés en fonction de la position assise de l'occupant.

19. Procédé de déplacement d'une colonne de direction selon la revendication 18, **caractérisé en ce qu'**en cas d'accident, selon un mode de fonctionnement, les dispositifs de déplacement (3) ne sont pas entraînés lors de la détection d'une distance prédéterminée ou d'un passage au-dessous d'une distance prédéterminée entre la position du siège (4) de l'occupant et le volant.

20. Procédé de déplacement d'une colonne de direction selon l'une des revendications 17 à 19, **caractérisé en ce que** les dispositifs de déplacement (3) sont amortis en fonction de l'état d'application de ceinture et/ou de la position assise de l'occupant.

21. Procédé de déplacement d'une colonne de direction selon la revendication 20, **caractérisé en ce qu'**en cas d'accident, selon un mode de fonctionnement, les dispositifs de déplacement (3) sont amortis complètement ou partiellement lorsque l'occupant n'a pas appliqué sa ceinture.

22. Procédé de déplacement d'une colonne de direction selon l'une ou l'autre des revendications 20 et 21, **caractérisé en ce qu'**en cas d'accident, selon un mode de fonctionnement, les dispositifs de déplacement (3) sont amortis complètement ou partiellement lors de la détection d'une distance prédéterminée ou d'un passage au-dessous d'une distance prédéterminée entre la position du siège (4) de l'occupant et le volant.
